# EUROPÄISCHE PATENTSCHRIFT

(11) **EP 4 648 878 B1**
(45) Veröffentlichungstag und Bekanntmachung des Hinweises auf die Patenterteilung: **28.10.2026**
(21) Anmeldenummer: 24715461.0
(22) Anmeldetag: 22.03.2024
(51) Int. Cl.: B01D 45/16, B01D 46/62, B01D 50/20

(54) **FILTERELEMENT FÜR GASFÖRMIGE MEDIEN, FILTERVORRICHTUNG, VERWENDUNG EINES FILTERELEMENTES UND VERFAHREN ZUM ZUSAMMENBAU EINER FILTERVORRICHTUNG**
FILTER ELEMENT FOR GASEOUS MEDIA, FILTER DEVICE, USE OF A FILTER ELEMENT AND METHOD OF ASSEMBLING A FILTER DEVICE
ÉLÉMENT FILTRANT POUR MILIEUX GAZEUX, DISPOSITIF DE FILTRATION, UTILISATION D'UN ÉLÉMENT FILTRANT ET PROCÉDÉ D'ASSEMBLAGE D'UN DISPOSITIF DE FILTRATION

(30) Priorität: 23.03.2023 DE 102023107300
(43) Veröffentlichungstag der Anmeldung: 19.11.2025
(73) Patentinhaber: MANN+HUMMEL GmbH, 71636 Ludwigsburg (DE)
(72) Erfinder: RUHLAND, Klaus-Dieter, 71636 Ludwigsburg (DE); KAUFMANN, Michael, 71636 Ludwigsburg (DE)
(74) Vertreter: Mann + Hummel Intellectual Property
(86) Internationale Anmeldenummer: PCT/EP2024/057706
(87) Internationale Veröffentlichungsnummer: WO 2024/194452

(56) Entgegenhaltungen:
- WO-A1-2019/104330
- WO-A1-2021/005507
- WO-A1-2021/005509
- US-A1- 2014 325 947
- US-A1- 2017 296 949

## Beschreibung

### Technisches Gebiet

Die Erfindung betrifft ein Filterelement für gasförmige Medien, insbesondere Luftfilterelement, für eine Filtervorrichtung, umfassend
- wenigstens einen Filtermediumkörper mit einer Anströmseite und einer Abströmseite, die jeweils an voneinander abgewandten bezüglich einer gedachten Achse axialen Enden des Filtermediumkörpers vorliegen,
- und ein den wenigstens einen Filtermediumkörper zumindest teilweise umlaufendes Rahmenelement, das bezüglich der Achse radial über den Filtermediumkörper auskragt und mit dem wenigstens einen Filtermediumkörper verbunden ist,
- wobei an einer der Anströmseite zugewandten Seite des Rahmenelements eine die Achse umlaufende Dichtung vorliegt,
- und wobei an einer der Abströmseite zugewandten Seite des Rahmenelements wenigstens ein Abstützabschnitt vorliegt, mittels dem das Filterelement in einem Filtergehäuse einer Filtervorrichtung zumindest in bezüglich der Achse axialer Richtung abstützbar ist.

Ferner betrifft die Erfindung eine Filtervorrichtung für gasförmige Medien, insbesondere für Luft,
- umfassend ein Filtergehäuse mit wenigstens einer Einlassöffnung für zu reinigendes gasförmiges Medium und wenigstens einer Auslassöffnung für gereinigtes gasförmiges Medium,
- wobei in dem Filtergehäuse bezüglich der Gasströmung zwischen der wenigstens einen Einlassöffnung und der wenigstens einen Auslassöffnung wenigstens ein Filterelement, welches wenigstens einen Filtermediumkörper aufweist, so angeordnet ist, dass dieses eine der Einlassöffnung zugeordnete Rohseite von einer der Auslassöffnung zugeordneten Reinseite trennt,
- wobei das Filtergehäuse ein erstes Gehäuseteil umfasst, an dem die wenigstens eine Auslassöffnung angeordnet ist und das wenigstens einen Filterelementaufnahmeraum aufweist, in dem das wenigstens eine Filterelement angeordnet ist,
- und wobei das Filtergehäuse ein zweites Gehäuseteil umfasst, an dem die wenigstens eine Einlassöffnung angeordnet ist und das wenigstens Teile wenigstens eines Zyklonabscheiders aufweist,
- wobei das zweite Gehäuseteil eine Serviceöffnung des ersten Gehäuseteils verschließt und das erste und das zweite Gehäuseteil lösbar miteinander verbunden und voneinander trennbar sind, um das wenigstens eine Filterelement durch die Serviceöffnung des ersten Gehäuseteils entnehmen zu können.

Des Weiteren betrifft die Erfindung die Verwendung eines Filterelements, umfassend zumindest einen Filtermediumkörper in einer Filtervorrichtung für gasförmige Medien.

Außerdem betrifft die Erfindung ein Verfahren zum Zusammenbau einer Filtervorrichtung für gasförmige Medien, bei dem wenigstens ein Filterelement durch eine Serviceöffnung in einen Filterelementaufnahmeraum eines ersten Gehäuseteils, welches wenigstens eine Auslassöffnung für gereinigtes gasförmiges Medium aufweist, eines Filtergehäuses der Filtervorrichtung eingebracht wird und anschließend die Serviceöffnung mit einem zweiten Gehäuseteil des Filtergehäuses, welches wenigstens eine Einlassöffnung für zu reinigendes gasförmiges Medium und wenigstens Teile wenigstens eines Zyklonabscheiders aufweist, verschlossen wird.

### Stand der Technik

Aus der US 2021/0077932 A1 ist eine Luftfilteranordnung bekannt, die ein Gehäuse mit einem Körper, einer Zugangsabdeckung, einem Luftstromeinlass und einem Luftstromauslass umfasst. Ferner umfasst sie eine Luftfilterpatrone, die funktionsfähig in dem Gehäuse angeordnet ist, wobei die axiale Quetschdichtung durch die Zugangsabdeckung gegen den Körper vorgespannt ist.

Weitere Filteranordnungen mit axial verpressten Dichtelementen sind beispielsweise aus der US 2017/0296949 A1 oder der US 2014/0325947 A1 bekannt.

In der WO 2021/005507 A1 und der WO 2021/005509 A1 ist eine Filteranordnung mit ineinander gestecktem Hauptfilterelement und Zusatzfilterelement offenbart, wobei das Hauptfilterelement in einer Tasche des Zusatzfilterelements anordenbar ist. Ein Dichtelement des Hauptfilterelements ist zwischen Deckel und Gehäusekörper anordenbar und verfügt über Zentriermittel zum Zusammenwirken mit Deckel oder Gehäusekörper.

Aus der WO 2019/104330 A1 ist ein Filterelement mit einem radialen Flansch am Einlassende bekannt, welcher Öffnungen aufweisen kann, in welche Vorsprünge des Gehäusekörpers eingreifen können. Hierdurch soll eine sichere Abdichtung zwischen Gehäusekörper und Dichtelement erzielt werden.

Der Erfindung liegt die Aufgabe zugrunde, ein Filterelement, eine Filtervorrichtung, die Verwendung eines Filterelements und ein Verfahren zum Zusammenbau einer Filtervorrichtung der eingangs genannten Art zu gestalten, bei denen die Filtervorrichtung verbessert werden kann, insbesondere die Filtervorrichtung in Bezug auf Funktionalität, Montage und/oder Zusammenbau verbessert werden kann.

### Offenbarung der Erfindung

Diese Aufgabe wird bei dem Filterelement erfindungsgemäß dadurch gelöst, dass der wenigstens eine Abstützabschnitt zumindest zwei über die bezüglich der Achse umlaufende Erstreckung verteilt angeordnete Abstützflächen aufweist, die bezüglich der Achse in axialer Richtung voneinander beabstandet sind, und die umlaufende Dichtung einen in bezüglich der Achse in axialer Richtung abstehenden umlaufenden Dichtsteg aufweist, der dazu ausgebildet ist, zumindest anteilig bezüglich der Achse radial gegenüber einer korrespondierenden Dichtfläche des Filtergehäuses abzudichten und dass das Rahmenelement weniger flexibel als die umlaufende Dichtung realisiert ist, insbesondere das Rahmenelement aus härterem Material als die umlaufende Dichtung gebildet ist.

Bei einer vorteilhaften Ausführungsform kann der Abstützabschnitt zumindest zwei, insbesondere vier, über den Umfang verteilt angeordnete Abstützflächen aufweisen, die jeweils bezüglich der axialen Richtung voneinander beabstandet sind. Auf diese Weise kann mit den Abstützflächen in unterschiedlicher axialer Höhe ein Schutz vor Falschmontage des Filterelements in dem Filtergehäuse realisiert werden.

Bei einer weiteren vorteilhaften Ausführungsform kann der Dichtsteg in der bezüglich der Achse axialen Richtung die Anströmseite des wenigstens einen Filtermediumkörpers überragen. Auf diese Weise kann die Anströmseite des Filtermediumkörpers bezüglich der Achse radial innerhalb des umlaufenden Dichtungsstegs angeordnet werden.

Bei einer weiteren vorteilhaften Ausführungsform kann
der Dichtsteg unmittelbar benachbart zu einer bezüglich der Achse radial äußeren Mantelfläche des Rahmenelements angeordnet sein
   und/oder
der Dichtsteg vollständig radial außerhalb einer bezüglich der Achse radial äußeren Mantelfläche des wenigstens einen Filtermediumkörpers angeordnet sein.

Vorteilhafterweise kann der Dichtsteg unmittelbar benachbart zu der radial äußeren Mantelfläche des Rahmenelements angeordnet sein. Auf diese Weise kann der Dichtsteg mit dem Rahmenelement insbesondere in bezüglich der Achse axialer Richtung abgestützt werden.

Alternativ oder zusätzlich kann vorteilhafterweise der Dichtsteg vollständig radial außerhalb der radial äußeren Mantelfläche des wenigstens einen Filtermediumkörpers angeordnet sein. Auf diese Weise können der Dichtsteg und der wenigstens eine Filtermediumkörper bezüglich einer Anpresskraft zur Realisierung der Dichtwirkung besser getrennt werden.

Bei einer weiteren vorteilhaften Ausführungsform kann
die Dichtung elastisches Material, insbesondere ein Elastomer, insbesondere ein geschäumtes Elastomer, aufweisen oder daraus bestehen
   und/oder
das Rahmenelement Kunststoff, insbesondere spritzgießbares Hartkunststoffmaterial, aufweisen oder daraus bestehen.

Das Rahmenelement ist weniger flexibel als die umlaufende Dichtung realisiert. Auf diese Weise kann mit dem Rahmenelement eine Stützfunktion und mit der Dichtung eine bessere Verformbarkeit realisiert werden. Dabei kann die unterschiedliche Flexibilität mittels unterschiedlicher Materialien und/oder mittels unterschiedlicher Formgebung realisiert werden.

Vorteilhafterweise kann das Rahmenelement aus härterem Material als die umlaufende Dichtung gebildet sein. Auf diese Weise kann das Rahmenelement weniger flexibel als die Dichtung ausgebildet werden. Bei dem Material kann es sich um ein einzelnes Material oder eine Materialmischung, insbesondere einen Verbundwerkstoff, handeln.

Alternativ oder zusätzlich kann das Rahmenelement abschnittsweise mit dem gleichen Material wie die Dichtung, insbesondere aus Dichtungsmaterial, realisiert sein. Auf diese Weise kann eine Verbindung des Rahmenelements und der Dichtung verbessert werden.

Alternativ oder zusätzlich können das Rahmenelement und die Dichtung als Mehrkomponentenbauteil, insbesondere Zweikomponentenbauteil, realisiert sein. Auf diese Weise kann eine Herstellung vereinfacht werden.

Vorteilhafterweise können die Dichtung und das Rahmenelement nach einem Mehrkomponenten-Spritzgussverfahren, insbesondere einem Zweikomponenten-Spritzgussverfahren, hergestellt werden.

Alternativ oder zusätzlich kann vorteilhafterweise die Dichtung elastisches Material aufweisen oder daraus bestehen. Auf diese Weise kann die Dichtung verformt werden. Aus Elastomer, insbesondere ein geschäumtes Elastomer, kann eine elastische Dichtung einfach hergestellt werden.

Alternativ oder zusätzlich kann das Rahmenelement Kunststoff aufweisen oder daraus bestehen. Auf diese Weise kann ein stabiles und leichtes Rahmenelement realisiert werden. Aus spritzgießbarem Hartkunststoffmaterial kann ein hartes und robustes Rahmenelement einfach mittels Spritzgießens realisiert werden. Mittels Spritzgießens können auch komplexe Formen für das Rahmenelement realisiert werden.

Bei einer weiteren vorteilhaften Ausführungsform kann
die umlaufende Dichtung an einer der Abströmseite zugewandten Seite von dem Rahmenelement begrenzt sein
   und/oder
eine der Abströmseite zugewandte Oberfläche des Rahmenelements zumindest abschnittsweise frei liegen und den wenigstens einen Abstützabschnitt bereitstellen. Durch die Begrenzung mit dem Rahmenelement kann die umlaufende Dichtung auf der der Abströmseite zugewandten Seite an dem Rahmenelement abgestützt werden. In den freiliegenden Abschnitten kann die Oberfläche des Rahmenelements ohne Zwischenlage von Dichtungsmaterial an einem entsprechenden Abschnitt des Filtergehäuses anliegen.

Bei einer weiteren vorteilhaften Ausführungsform kann
sich das Rahmenelement ausgehend von dem Abstützabschnitt nach radial innen und/oder in Richtung auf die Anströmseite zu erstrecken
   und/oder
das Rahmenelement wenigstens abschnittsweise von Material der umlaufenden Dichtung umschlossen sein.

Vorteilhafterweise kann sich das Rahmenelement ausgehend von dem Abstützabschnitt nach radial innen und/oder in Richtung auf die Anströmseite zu erstrecken. Auf diese Weise kann eine Stabilisierung für wenigstens einen Filtermediumkörper realisiert werden. Ferner kann auf diese Weise ein Teil des Rahmenelements als Gießschale für Material der Dichtung dienen.

Alternativ oder zusätzlich kann vorteilhafterweise das Rahmenelement wenigstens abschnittsweise von Material der umlaufenden Dichtung umschlossen sein. Auf diese Weise kann eine Stützwirkung für die Dichtung verbessert werden.

Bei einer weiteren vorteilhaften Ausführungsform kann das Rahmenelement bezüglich seines Verlaufs wenigstens an seiner radial äußeren Mantelseite und/oder seiner radial inneren Mantelseite bezüglich der Achse keine Rotationssymmetrie aufweisen. Auf diese Weise kann falsche Montage des Filterelements, insbesondere falsche Ausrichtung, beim Einbau in das Filtergehäuse vermieden werden.

Bei einer weiteren vorteilhaften Ausführungsform kann
das Rahmenelement entlang seines um die Achse laufenden Verlaufs wenigstens vier Abschnitte aufweisen, von denen die jeweils benachbarten Abschnitte unterschiedlich gebogene, auch gerade Verläufe aufweisen, und bei wenigstens einem Paar von jeweils zwei der Abschnitte auf gegenüberliegenden Seiten der Achse die entsprechenden Abschnitte unterschiedlich gebogene Verläufe aufweisen
   und/oder
der in Axialrichtung abstehende umlaufende Dichtsteg entlang seines um die Achse laufenden Verlaufs wenigstens vier Abschnitte aufweisen, von denen die jeweils benachbarten Abschnitte unterschiedlich gebogene, auch gerade Verläufe aufweisen, und bei wenigstens einem Paar von jeweils zwei der Abschnitte auf gegenüberliegenden Seiten der Achse die entsprechenden Abschnitte unterschiedlich gebogene Verläufe aufweisen. Auf diese Weise kann eine Rotationssymmetrie des Rahmenelements und/oder des Dichtstegs bezüglich der Achse vermieden werden. So kann eine Falschmontage des Filterelements im Filtergehäuse verhindert werden.

Bei einer weiteren vorteilhaften Ausführungsform kann
das Rahmenelement wenigstens zwei bezüglich ihres um die Achse umlaufenden Verlaufs gebogene Abschnitte aufweisen, die durch zwei Verbindungsabschnitte, insbesondere zwei bezüglich ihres um die Achse umlaufenden Verlaufs gerade Verbindungsabschnitte, verbunden sind, wobei die Verbindungsabschnitte, insbesondere die geraden Verbindungsabschnitte, an bezüglich der Achse gegenüberliegenden Langseiten des Rahmenelements vorliegen und die zwei gebogenen Abschnitte an bezüglich der Achse gegenüberliegenden Kurzseiten des Rahmenelements vorliegen,
   und/oder
der in Axialrichtung abstehende umlaufende Dichtsteg wenigstens zwei bezüglich ihres um die Achse umlaufenden Verlaufs gebogene Abschnitte aufweisen, die durch zwei Verbindungsabschnitte, insbesondere zwei bezüglich ihres um die Achse umlaufenden Verlaufs gerade Verbindungsabschnitte, verbunden sind, wobei die Verbindungsabschnitte, insbesondere die geraden Verbindungsabschnitte, an bezüglich der Achse gegenüberliegenden Langseiten des Dichtstegs vorliegen und die zwei gebogenen Abschnitte an bezüglich der Achse gegenüberliegenden Kurzseiten des Dichtstegs vorliegen. Auf diese Weise kann eine Rotationssymmetrie des Rahmenelements und/oder des Dichtstegs bezüglich der Achse vermieden werden. So kann eine Falschmontage des Filterelements im Filtergehäuse verhindert werden.

Bei einer weiteren vorteilhaften Ausführungsform kann
das Rahmenelement einen ersten gebogenen Abschnitt und einen zweiten gebogenen Abschnitt aufweisen, wobei der erste gebogene Abschnitt zumindest abschnittsweise einen größeren Krümmungsradius aufweist als der zweite gebogene Abschnitt,
   und/oder
der in Axialrichtung abstehende umlaufende Dichtsteg einen ersten gebogenen Abschnitt und einen zweiten gebogenen Abschnitt aufweisen, wobei der erste gebogene Abschnitt zumindest abschnittsweise einen größeren Krümmungsradius aufweist als der zweite gebogene Abschnitt. Durch die unterschiedlichen Biegungen der gebogenen Abschnitte in Kombination mit unterschiedlichen Längen der Verbindungsabschnitte und der gebogenen Abschnitte kann eine Rotationssymmetrie bezüglich der Achse vermieden werden.

Bei einer weiteren vorteilhaften Ausführungsform kann
der erste gebogene Abschnitt des Rahmenelements einen abgeflachten Bereich aufweisen, in dem der Krümmungsradius gegenüber dem Krümmungsradius des zweiten gebogenen Abschnitts vergrößert ist,
   und/oder
der erste gebogene Abschnitt des Dichtstegs einen abgeflachten Bereich aufweisen, in dem der Krümmungsradius gegenüber dem Krümmungsradius des zweiten gebogenen Abschnitts vergrößert ist. So können einfach unterschiedliche Krümmungsradien realisiert werden.

Bei einer weiteren vorteilhaften Ausführungsform kann wenigstens eine der Abstützflächen des Rahmenelements zumindest teilweise im Bereich einer Langseite des Rahmenelements vorliegen. Auf diese Weise kann eine großflächige Abstützung erfolgen.

Bei einer weiteren vorteilhaften Ausführungsform kann
die bezüglich der Achse radial äußere Mantelfläche des Filtermediumkörpers bezüglich ihres um die Achse umlaufenden Verlaufs zumindest zwei gebogene Abschnitte aufweisen, die durch zwei Verbindungsabschnitte, insbesondere zwei gerade Verbindungsabschnitte, verbunden sind,
   und/oder
sich ein Außenumfang des Filtermediumkörpers in axialer Richtung von der Anströmseite zur Abströmseite betrachtet verringern, insbesondere kann sich der Filtermediumkörper bezüglich seiner radial äußeren Seite in axialer Richtung von der Anströmseite zur Abströmseite betrachtet verjüngen, insbesondere konisch verjüngen.

Durch die Kombination der wenigstens zwei gebogenen Abschnitte und der Verbindungsabschnitte kann eine in Richtung der Achse betrachtet ovale äußere Form des Filtermediumkörpers realisiert werden. Vorteilhafterweise können die zwei Verbindungsabschnitte gerade sein. Auf diese Weise kann eine lang ovale äußere Form des Filtermediumkörpers realisiert werden.

Durch die Verringerung des Außenumfangs von der Anströmseite zur Abströmseite betrachtet kann ein den Filtermediumkörper umgebender Raum innerhalb des Filtergehäuses vergrößert werden.

Bei einer weiteren vorteilhaften Ausführungsform kann der Filtermediumkörper von bezüglich der Achse radial innen nach radial außen oder umgekehrt durchströmbar sein. Auf diese Weise kann ein Verhältnis zwischen benötigtem Bauraum und zur Verfügung stehender aktiver Filterfläche des Filtermediumkörpers zugunsten der aktiven Filterfläche verbessert werden.

Bei einer weiteren vorteilhaften Ausführungsform kann
der wenigstens eine Filtermediumkörper zumindest zwei Filterbälge, insbesondere einen inneren Filterbalg und einen äußeren Filterbalg, insbesondere zumindest zwei gefaltete Filterbälge, umfassen, welche wenigstens teilweise um die Achse verlaufen und die parallel mit zu reinigendem gasförmigem Medium durchströmbar sind,
   und/oder
ein innerer Filterbalg des wenigstens einen Filtermediumkörpers in einem von einem äußeren Filterbalg des wenigstens einen Filtermediumkörpers umschlossenen Innenraum angeordnet sein
   und/oder
der wenigstens eine Filtermediumkörper wenigstens einen Filterbalg, insbesondere einen inneren Filterbalg und/oder einen äußeren Filterbalg, aufweisen, der eine Neigung gegenüber der Achse aufweist. Durch den Einsatz von mehreren Filterbälgen und deren besondere Anordnung zueinander kann insgesamt ein Verhältnis des Platzbedarfs zu der durchströmbaren aktiven Filterfläche verbessert werden.

"Parallel durchströmbar" bedeutet in diesem Zusammenhang, dass die Filterbälge funktional, insbesondere bezüglich der Strömung des gasförmigen Mediums, parallel wirkend angeordnet sind. Es bedeutet nicht, dass die Filterbälge parallel im geometrischen Sinne angeordnet sind. Die Filterbälge werden parallel von zu reinigendem gasförmigem Medium durchströmt. Im Unterschied dazu werden bei einer seriellen Anordnung der Filterbälge diese nacheinander, also seriell, durchströmt.

Bei einer weiteren vorteilhaften Ausführungsform kann bezüglich der Achse radial zwischen den wenigstens zwei Filterbälgen, insbesondere radial zwischen dem inneren Filterbalg und dem äußeren Filterbalg, wenigstens ein fluiddurchlässiges Stützelement vorliegen, an dem sich zumindest abschnittsweise wenigstens einer der wenigstens zwei Filterbälge, insbesondere ein innerer Filterbalg und/oder ein äußerer Filterbalg, abstützt,
und/oder
das Filterelement wenigstens ein Stützelement aufweisen, an welchem wenigstens einer der Filterbälge abgestützt ist, wobei das wenigstens eine Stützelement einteilig mit dem Rahmenelement gebildet sein kann. Mithilfe des Stützelements kann die Formstabilität des Filtermediumkörpers verbessert werden. Dabei ermöglicht die Fluiddurchlässigkeit, dass der Fluss des gasförmigen Mediums nicht behindert wird.

Vorteilhafterweise kann das Filterelement wenigstens ein Stützelement aufweisen, an welchem wenigstens einer der Filterbälge abgestützt ist, wobei das wenigstens eine Stützelement einteilig mit dem Rahmenelement gebildet sein kann. Auf diese Weise kann die mechanische Stabilität weiter verbessert werden.

Vorteilhafterweise kann das Stützelement und/oder das Rahmenelement Teil eines Skeletts sein. Mithilfe des Skeletts kann die gesamte Form des Filterelements stabilisiert werden.

Ferner wird die Aufgabe erfindungsgemäß bei der Filtervorrichtung dadurch gelöst, dass wenigstens eines der Filterelemente ein erfindungsgemäßes Filterelement ist.

Des Weiteren wird die Aufgabe erfindungsgemäß bei der Verwendung dadurch gelöst, dass das Filterelement ein erfindungsgemäßes Filterelement ist.

Außerdem wird die Aufgabe erfindungsgemäß bei dem Verfahren dadurch gelöst, dass wenigstens ein erfindungsgemäßes Filterelement in den Filterelementaufnahmeraum eingebracht wird.

Vorteilhafterweise kann eine Filtervorrichtung für gasförmige Medien, insbesondere für Luft, umfassen
- ein Filtergehäuse mit wenigstens einer Einlassöffnung für zu reinigendes gasförmiges Medium und wenigstens einer Auslassöffnung für gereinigtes gasförmiges Medium,
- wobei in dem Filtergehäuse bezüglich der Gasströmung zwischen der wenigstens einen Einlassöffnung und der wenigstens einen Auslassöffnung wenigstens ein Filterelement, welches wenigstens einen Filtermediumkörper aufweist, so angeordnet ist, dass dieses eine der Einlassöffnung zugeordnete Rohseite von einer der Auslassöffnung zugeordneten Reinseite trennt,
- wobei das Filtergehäuse ein erstes Gehäuseteil umfasst, an dem die wenigstens eine Auslassöffnung angeordnet ist und das wenigstens einen Filterelementaufnahmeraum aufweist, in dem das wenigstens eine Filterelement angeordnet ist,
- und wobei das Filtergehäuse ein zweites Gehäuseteil umfasst, an dem die wenigstens eine Einlassöffnung angeordnet ist und das wenigstens Teile wenigstens eines Zyklonabscheiders aufweist,
- wobei das zweite Gehäuseteil eine Serviceöffnung des ersten Gehäuseteils verschließt und das erste und das zweite Gehäuseteil lösbar miteinander verbunden und voneinander trennbar sind, um das wenigstens eine Filterelement durch die Serviceöffnung des ersten Gehäuseteils entnehmen zu können.

Vorteilhafterweise kann das wenigstens eine Filterelement an einer dem zweiten Gehäuseteil zugewandten Anströmseite eine um eine gedachte Achse umlaufende Dichtung aufweisen, die einen zumindest anteilig radial zur Achse dichtend wirkenden, um die Achse umlaufenden Dichtabschnitt aufweist, wobei eine bezüglich der Achse radial äußere Umfangsseite des Dichtabschnitts an einer bezüglich der Achse radial inneren Innenmantelfläche des ersten Gehäuseteils dichtend anliegt, wobei insbesondere eine von dem zweiten Gehäuseteil zumindest mit einer Richtungskomponente in bezüglich der Achse axialer Richtung abstehende, die Achse zumindest teilweise umlaufende Rippe eine Anpresskraft auf die umlaufende Dichtung ausübt, um den zumindest anteilig radial dichtend wirkenden umlaufenden Dichtabschnitt an die Innenmantelfläche des ersten Gehäuseteils zu pressen.

Vorteilhafterweise kann das zweite Gehäuseteil eine umlaufende Rippe aufweisen, mit welcher bei zusammengebauter Filtervorrichtung eine Anpresskraft auf die umlaufende Dichtung ausgeübt wird. Infolge der Anpresskraft wird ein zumindest anteilig radial dichtend wirkender umlaufender Dichtabschnitt an eine Innenmantelfläche des ersten Gehäuseteils gepresst. Auf diese Weise wird mit der Dichtung der Filterelementaufnahmeraum zur Umgebung hin abgedichtet. Ferner wird so die Rohseite des Filterelements von der Reinseite getrennt.

Durch den zumindest anteilig in radialer Richtung wirkenden Dichtabschnitt wird erreicht, dass eine Dichtungsfläche der Dichtung aufseiten des wenigsten einen Filterelements in nicht verspanntem Zustand des ersten Gehäuseteils zu dem zweiten Gehäuseteil ein Spiel, insbesondere einen Radialspalt, zu einer Gegenfläche des Filtergehäuses, nämlich der Innenmantelfläche des ersten Gehäuseteils, aufweist. Erst durch die Verspannung des zweiten Gehäuseteils mit dem ersten Gehäuseteil wird der umlaufende Dichtabschnitt an die Innenmantelfläche des ersten Gehäuseteils gepresst. Dadurch entsteht die Dichtwirkung zwischen dem ersten Gehäuseteil, dem zweiten Gehäuseteil und dem Filterelement. Zusätzlich kann ein Zyklonblock, welcher den wenigstens einen Zyklonabscheider aufweist, bezüglich der Achse axial durch die Dichtung abgedichtet werden.

Insgesamt ermöglicht der erfindungsgemäße Aufbau der Filtervorrichtung eine einfache Montage des Filterelements ohne Krafteinwirkung in das Filtergehäuse. Die Verspannung der Dichtung kann durch eine axiale Verspannung des ersten Gehäuseteils mit dem zweiten Gehäuseteil erfolgen. Hierzu kann eine Hebelwirkung von geeigneten Verschlusselementen genutzt werden.

Mit der Dichtung kann ein Eintrag von Partikeln und/oder Wasser zur Reinseite zwischen dem wenigstens einen Filterelement und dem Filtergehäuse verhindert werden. Außerdem kann auch ein Eintrag von Partikeln und/oder Wasser in einen Bereich zwischen dem wenigstens einen Filterelement und dem zweiten Gehäuseteil, insbesondere einer Tauchrohrplatte und/oder einem Zyklonblock, verhindert werden.

Die Filtervorrichtung und das Filterelement können bei Fahrzeugen, insbesondere Kraftfahrzeugen, bei Bau- und/oder Landmaschinen, Kompressoren, in Verbindung mit Verbrennungsmotoren, bei Kathodenfiltern, insbesondere in Verbindung mit Brennstoffzellen, verwendet werden.

Bei dem zu reinigenden gasförmigen Medium kann es sich um Luft handeln. In diesem Fall kann die Filtervorrichtung auch aus Luftfiltervorrichtung bezeichnet werden. Mit der Filtervorrichtung können aus dem gasförmigen Medium feste oder flüssige Partikel entfernt werden.

Die Achse kann mit einer Gehäuseachse des Filtergehäuses, einer Einbau-/Ausbauachse des Filterelements in das erste Gehäuseteil, einer Verbindungsachse des ersten Gehäuseteils mit dem zweiten Gehäuseteil und/oder einer Elementachse des Filterelements zusammenfallen. Wenn bei der Beschreibung von "radial", "koaxial", "axial", "tangential", "umfangsmäßig", "konzentrisch", "exzentrisch" oder dergleichen die Rede ist, so bezieht sich dies, sofern nicht anders erwähnt, auf die Achse. "Umfangsmäßig" bezieht sich dabei auf eine gedachte Mantelfläche, welche die Achse umgibt. Die Achse kann insbesondere eine Längsachse sein.

Vorteilhafterweise kann das zweite Gehäuseteil mittels einer Spannvorrichtung mit dem ersten Gehäuseteil verspannt sein. Vorteilhafterweise kann mit der Spannvorrichtung eine wenigstens in axialer Richtung wirkende Antriebskraft zwischen dem ersten Gehäuseteil und dem zweiten Gehäuseteil realisiert werden. Vorteilhafterweise kann die Spannvorrichtung lösbar sein. Vorteilhafterweise kann die Spannvorrichtung wenigstens ein Spannelement, insbesondere wenigstens eine Schraube, wenigstens einen Spannhaken und/oder wenigstens einen Schnapphaken oder dergleichen, aufweisen. Vorteilhafterweise kann die Spannvorrichtung direkt an dem zweiten Gehäuseteil angreifen.

Alternativ oder zusätzlich kann die Spannvorrichtung an einem Zyklongehäuse angreifen, zwischen dem und dem ersten Gehäuseteil das zweite Gehäuseteil angeordnet ist.

Vorteilhafterweise kann der wenigstens eine Zyklonabscheider, insbesondere ein Zyklonblock mit mehreren Zyklonabscheidern, wenigstens eine Staubaustragsvorrichtung aufweisen.

Vorteilhafterweise kann der wenigstens eine Zyklonabscheider ein Axialzyklon sein.

Vorteilhafterweise kann die Filtervorrichtung wenigstens einen Zyklonblock aufweisen, welcher eine Mehrzahl von Zyklonabscheidern aufweist. Auf diese Weise kann ein größerer Gasstrom gereinigt werden und der zur Verfügung stehende Bauraum optimal ausgenutzt werden.

Vorteilhafterweise können sich die wenigstens eine Einlassöffnung und die wenigstens eine Auslassöffnung auf bezüglich der Achse axial gegenüberliegenden Seiten des Filtergehäuses befinden.

Vorteilhafterweise kann der wenigstens eine Filtermediumkörper wenigstens einen Filterbalg, insbesondere wenigstens einen Einfachbalg und/oder wenigstens einen Doppelbalg, aufweisen.

Vorteilhafterweise kann der Filtermediumkörper ein zur Filtrierung von gasförmigem Medium, insbesondere Luft, geeignetes Filtermedium, insbesondere Filterpapier, Filtervlies, Filterschaum oder dergleichen, aufweisen.

Vorteilhafterweise kann das Filtermedium des wenigstens einen Filtermediumkörpers gefaltet oder gewickelt sein. Auf diese Weise kann die aktive Filterfläche vergrößert werden. Das Filterelement kann entsprechend als Falt-Filterelement oder als Wickelelement ausgestaltet sein.

Vorteilhafterweise kann das wenigstens eine Filterelement ein Kompaktfilterelement, ein Hohlfilterelement, ein Flachfilterelement oder dergleichen sein.

Vorteilhafterweise kann der Filtermediumkörper insbesondere zickzackförmig gefaltetes Filtermedium mit tiefen Falten aufweisen. Bei einem etwa quaderförmigen oder prismatischen Filtermediumkörper spricht man insbesondere dann von tiefen Falten, wenn eine Faltenhöhe etwa wenigstens so groß ist wie die Ausdehnung in Richtung der Faltkanten und/oder in Richtung quer zu den Faltkanten.

Ein Hohlfilterelement zeichnet sich dadurch aus, dass es wenigstens einen Elementinnenraum aufweist, welcher von Filtermedium umgeben wird.

Bei dem Hohlfilterelement kann es sich vorteilhafterweise um ein so genanntes Rundfilterelement mit einem runden Querschnitt, ein ovales Rundfilterelement mit einem ovalen Querschnitt, ein flach-ovales Rundfilterelement mit einem abgeflachten ovalen Querschnitt, ein konisches Rundfilterelement, bei dem sich der runde Querschnitt in axialer Richtung zu einer Hauptachse verjüngt, ein konisch-ovales Rundfilterelement, bei dem sich der ovale Querschnitt in axialer Richtung zumindest in Richtung einer Querachse verjüngt, ein konisches flach-ovales Rundfilterelement, bei dem sich der flach-ovale Querschnitt in axialer Richtung zumindest in Richtung einer Querachse verjüngt, oder ein Hohlfilterelement mit einem andersartigen, insbesondere einem eckigen, Querschnitt und/oder einem andersartigen axialen Querschnittsverlauf in Richtung einer Elementachse, handeln.

Vorteilhafterweise kann die Rippe fest, insbesondere bezüglich der Druckbelastung fest, insbesondere ortsfest, am zweiten Gehäuseteil angeordnet sein. Auf diese Weise wird die Rippe beim axialen Zusammenbau des ersten Gehäuseteils und des zweiten Gehäuseteils unter Zwischenlage des wenigstens einen Filterelements mit dem zweiten Gehäuseteil mit verlagert. Dies wäre nicht möglich, wenn das zweite Gehäuseteil Teil des wenigstens einen Filterelements wäre. Insbesondere wird die Rippe beim Zusammenbau durch die Spannwirkung einer Spannvorrichtung mit dem zweiten Gehäuseteil mit verlagert.

Die Rohseite ist die Seite, auf der sich beim Betrieb der Filtervorrichtung das noch zu reinigende gasförmige Medium befindet. Die Reinseite ist die Seite, auf der sich gereinigtes gasförmiges Medium befindet.

Vorteilhafterweise kann die Rippe den zumindest anteilig radial dichtend wirkenden umlaufenden Dichtabschnitt an einer radial inneren Umfangsseite des Dichtabschnitts, insbesondere auf einer der Innenmantelfläche des ersten Gehäuseteils radial gegenüberliegenden radial inneren Umfangsseite des Dichtabschnitts, stützen. Auf diese Weise kann der Dichtabschnitt mit der Rippe, insbesondere unmittelbar, an die Innenmantelfläche des ersten Gehäuseteils gepresst werden.

Vorteilhafterweise kann die durch die Rippe ausgeübte Presskraft wenigstens eine Richtungskomponente aufweisen, welche bezüglich der Achse von radial innen nach radial außen gerichtet ist. Auf diese Weise kann der entsprechende Dichtabschnitt direkt mit der radialen Dichtkraft nach außen an die Innenmantelfläche des ersten Gehäuseteils gepresst werden. Die durch die Rippe ausgeübte Presskraft kann so direkt die radiale Dichtkraft aufbringen.

Alternativ oder zusätzlich kann die durch die Rippe ausgeübte Presskraft eine wenigstens parallel zur Achse gerichtete Richtungskomponente aufweisen. Auf diese Weise kann die wenigstens eine Dichtung in axialer Richtung verpresst werden. Das Dichtungsmaterial kann der Verpressung nach radial außen ausweichen und so radial wirkend an die Innenmantelfläche des ersten Gehäuseteils pressen. Die durch die Rippe ausgeübte Anpresskraft kann so die radiale Dichtkraft mittelbar, insbesondere durch Verformung der Dichtung in Querrichtung, aufbringen.

Vorteilhafterweise kann der wenigstens eine Dichtabschnitt der umlaufenden Dichtung bei dem mit dem wenigstens einen Filterelement montierten Filtergehäuse gegenüber dem nicht montierten wenigstens einen Filterelement verformt sein. Der entsprechende Dichtabschnitt kann so flexibel an die Innenmantelfläche des ersten Gehäuseteils gepresst werden.

Vorteilhafterweise kann die Rippe die umlaufende Dichtung an einer bezüglich der Achse axialen Stirnfläche, welche dem zweiten Gehäuseteil zugewandt ist, mit einer bezüglich der Achse in axialer Richtung wirkenden Richtungskomponente der Anpresskraft kontaktieren. Auf diese Weise kann die umlaufende Dichtung durch Verpressung verformt werden. Die verformte Dichtung kann so anteilig radial wirksam dichtend an die Innenmantelfläche des Gehäuses gepresst werden.

Vorteilhafterweise kann die Rippe die umlaufende Dichtung an einer anströmseitigen Stirnfläche in Axialrichtung, insbesondere unmittelbar, kontaktieren, um eine Verformung der umlaufenden Dichtung zu bewirken und dadurch den anteilig radial wirksamen umlaufenden Dichtabschnitt an die Innenmantelfläche des Gehäuse zu pressen.

Vorteilhafterweise kann die Rippe wenigstens abschnittsweise rampenförmig ausgebildet sein, und/oder eine der radial inneren Umfangsseite des zumindest anteilig radial dichtend wirkenden umlaufenden Dichtabschnitts zugewandte Kontaktfläche der Rippe einen spitzen Winkel mit der Achse einschließen. Auf diese Weise kann die Rippe beim axialen Zusammenbau des ersten Gehäuseteils und des zweiten Gehäuseteils an der radial inneren Umfangsseite des Dichtabschnitts entlanggleiten und diesen sukzessive an die Innenmantelfläche des ersten Gehäuseteils pressen. Aufgrund der Keilwirkung zwischen "angewinkelter" Rippe und Dichtabschnitt können mit überschaubaren axialen Montagekräften hohe radial wirkende Dichtungsvorspannkräfte erreicht werden.

Vorteilhafterweise kann der zumindest anteilig radial dichtend wirkende umlaufende Dichtabschnitt wenigstens abschnittsweise gegenüber einer bezüglich der Achse radial äußeren Außenmantelfläche des Filtermediumkörpers nach radial außen versetzt sein und/oder der zumindest anteilig radial dichtend wirkende umlaufende Dichtabschnitt die Anströmseite des Filtermediumkörpers wenigstens abschnittsweise axial überragen.

Vorteilhafterweise die Filtervorrichtung einen Zyklonblock mit mehreren Zyklonabscheidern aufweisen, wobei der Zyklonblock eine Tauchrohrplatte als zweites Gehäuseteil des Filtergehäuses umfasst, welche eine Mehrzahl an Tauchrohren aufweist, und die umlaufende Rippe an der Tauchrohrplatte ausgebildet ist, und/oder die wenigstens eine Einlassöffnung an dem wenigstens einen Teil des wenigstens einen Zyklonabscheiders, insbesondere in einem Tauchrohr des wenigstens einen Zyklonabscheiders, angeordnet sein und/oder das zweite Gehäuseteil Teile eines Zyklonblocks umfassen, welcher mehrere Zyklonabscheider aufweist, und/oder das zweite Gehäuseteil eine Tauchrohrplatte mit wenigstens einem Tauchrohr eines Zyklonabscheiders aufweisen oder sein und/oder das zweite Gehäuseteil mehrere Tauchrohre von entsprechenden Zyklonabscheidern aufweisen und/oder das zweite Gehäuseteil zwischen dem ersten Gehäuseteil und einem Zyklongehäuse eines Zyklonblocks angeordnet sein, zu welchem der wenigstens eine Zyklonabscheider gehört. Auf diese Weise kann die Filtervorrichtung kompakt mit wenigstens einem Filterelement und wenigstens an einem Zyklonblock ausgestaltet sein. Mit dem Zyklonblock mit einer Mehrzahl von Zyklonabscheidern kann eine effiziente Vorabscheidung von Partikeln aus dem zu reinigenden gasförmigen Medium erfolgen und der Bauraumbedarf für die Vorabscheidung minimiert werden.

Vorteilhafterweise kann ein anströmseitiges axiales Ende der umlaufenden Dichtung in Richtung axial zur Achse betrachtet ein freies Ende der Rippe des zweiten Gehäuseteils überragen und/oder die Rippe in Richtung axial zur Achse betrachtet ein freies Ende der umlaufenden Dichtung, insbesondere des wenigstens einen Dichtabschnitts, überragen und/oder die Rippe in eine Vertiefung der umlaufenden Dichtung eintauchen, welche auf ihrer der Anströmseite bezüglich der Achse axial zugewandten Seite offen ist, und/oder das zweite Gehäuseteil wenigstens ein Tauchrohr wenigstens eines Zyklonabscheiders aufweisen, welches auf seiner der Anströmseite des wenigstens einen Filterelements zugewandten Seite ein Ausströmende aufweist, welches von einem Tauchrohrrandabschnitt wenigstens abschnittsweise umgeben ist, wobei der Tauchrohrrandabschnitt sich bei montierter Filtervorrichtung in einem axialen Abstand zu dem freien Ende der umlaufenden Dichtung radial innerhalb des Dichtabschnitts befinden kann. Auf diese Weise kann eine axiale Überlappung zwischen der Dichtung und dem zweiten Gehäuseteil, insbesondere der Rippe und/oder der Tauchrohre, realisiert werden.

Vorteilhafterweise kann sich der Tauchrohrrandabschnitt bei montierter Filtervorrichtung in einem axialen Abstand zu dem freien Ende der Dichtung radial innerhalb des Dichtabschnitts befinden. Vorteilhafterweise kann sich das Ausströmende axial betrachtet jenseits des anströmseitigen axialen freien Endes der umlaufenden Dichtung befinden. Der das Ausströmende wenigstens abschnittsweise umgebende Tauchrohrrandabschnitt, und damit auch das Ausströmende des wenigstens einen Tauchrohrs, kann axial betrachtet hinter das freie Ende der umlaufenden Dichtung und damit hinter das anströmseitige Ende des wenigstens einen Filterelements eintauchen.

Vorteilhafterweise kann das erste Gehäuseteil einen zumindest teilweise umlaufenden radial auskragenden Bund aufweisen, der zumindest eine axiale Anlagefläche bereitstellt, an der sich der zumindest eine radial auskragende Abstützabschnitt des Filterelements abstützt. Auf diese Weise kann die umlaufende Dichtung zusätzlich bezüglich der Achse in axialer Richtung an dem ersten Gehäuseteil abgestützt werden. Dort kann ein weiterer Dichtbereich realisiert werden. In dem weiteren Dichtbereich kann die wenigstens eine umlaufende Dichtung in axialer Richtung dichtend wirken.

Vorteilhafterweise kann sich der auskragende Bund des ersten Gehäuseteils durchgängig zusammenhängend, insbesondere umlaufend, erstrecken oder unterbrochen sein.

Vorteilhafterweise kann der Bund wenigstens zwei axiale Anlageflächen, insbesondere vier axiale Anlageflächen, aufweisen, welche sich in unterschiedlichen axialen Höhen befinden, und/oder der Bund wenigstens zwei Bundabschnitte, insbesondere vier Bundabschnitte, mit jeweiligen Anlageflächen aufweisen, welche sich jeweils teilweise die Achse umlaufend erstrecken. Auf diese Weise kann ein Schutz gegen falschen Zusammenbau der Filtervorrichtung realisiert werden. Insbesondere kann so eine falsche Orientierung des wenigstens einen Filterelements, des ersten Gehäuseteils und des zweiten Gehäuseteils beim Zusammenbau verhindert werden.

Vorteilhafterweise kann ein Anlagebereich des Dichtabschnitts, in dem der Dichtabschnitt radial dichtend wirkend an der Innenmantelfläche des ersten Gehäuseteils anliegt, in einem axialen Abstand zu der wenigstens einen axialen Anlagefläche des Bundes angeordnet sein. Auf diese Weise kann zwischen dem Dichtabschnitt und der Innenmantelfläche des ersten Gehäuseteils ein Bereich realisiert werden, in welchem der wenigstens eine Dichtabschnitt nicht an der Innenmantelfläche anliegt.

Vorteilhafterweise können das erste Gehäuseteil und das zweite Gehäuseteil eine Dichtungskammer bilden, in der der zumindest anteilig radial wirksame umlaufende Dichtabschnitt aufgenommen ist, wobei die Dichtungskammer radial innen durch die Rippe des zweiten Gehäuseteils, radial außen durch die Innenmantelfläche des ersten Gehäuseteils und axial durch einen mit dem zweiten Gehäuseteil verbundenen Kragen, insbesondere durch einen Kragen eines mit dem zweiten Gehäuseteil verbundenen weiteren Teils, begrenzt ist. Auf diese Weise wird ein Raum ermöglicht, innerhalb dem der Dichtabschnitt auch nach einer Verformung Platz findet.

Vorteilhafterweise kann der Kragen eine Axialdichtfläche bereitstellen, an der die umlaufende Dichtung in axialer Richtung dichtend wirkend anliegt. Auf diese Weise wird eine Abdichtung nach außen, insbesondere zur Umgebung hin, ermöglicht.

Vorteilhafterweise kann die Dichtungskammer an der Anströmseite axial mit einem mit dem zweiten Gehäuseteil verbundenen Kragen, insbesondere mit einem Kragen eines mit dem zweiten Gehäuseteil verbundenen weiteren Teils, begrenzt sein.

Vorteilhafterweise kann die umlaufende Dichtung an einem dem zweiten Gehäuseteil abgewandten axialen Ende durch ein wenigstens teilweise um die Achse verlaufendes Rahmenelement begrenzt sein, das mit dem Filtermediumkörper verbunden ist, wobei das Rahmenelement, insbesondere eine Oberfläche des Rahmenelements, wenigstens abschnittsweise freiliegt, und wobei das Rahmenelement, insbesondere zumindest ein freiliegender Abschnitt des Rahmenelements, einen radial auskragenden Abstützabschnitt des Filterelements wenigstens mitbilden kann, der sich an einer axialen Anlagefläche eines radial auskragenden Bunds des ersten Gehäuseteils abstützt. Auf diese Weise kann die umlaufende Dichtung auf ihrer dem zweiten Gehäuseteil axial abgewandten Seite abgestützt werden. Ferner kann dadurch der wenigstens eine Abstützabschnitt stabil mit dem Filtermediumkörper verbunden werden und eine steife formschlüssige Anlage des Filterelements am Gehäuse realisiert werden.

Vorteilhafterweise kann das Rahmenelement Kunststoff aufweisen oder daraus bestehen. Auf diese Weise kann das Rahmenelement robust, flexibel und mit geringem Gewicht realisiert werden. In diesem Fall kann für das Rahmenelement auch die Bezeichnung "Kunststoffrahmen" verwendet werden. Alternativ oder zusätzlich kann vorteilhafterweise das Rahmenelement auch wenigstens ein anderes Material, insbesondere Metall, Kohlefasern oder einen Verbundwerkstoff aufweisen oder daraus bestehen.

Vorteilhafterweise kann das Rahmenelement Teil eines Skeletts des Filterelements sein und/oder mit einem Skelett des Filterelements verbunden sein. An dem Skelett kann der wenigstens eine Filtermediumkörper gehalten werden. Mit dem Skelett kann das wenigstens eine Filterelement stabilisiert und in Form gehalten werden. Wenigstens ein Teil des Skeletts kann Kunststoff, Metall, Kohlefasern oder einen Verbundwerkstoff aufweisen oder daraus bestehen.

Vorteilhafterweise kann das Skelett, insbesondere das Skelett mit dem Rahmenelement, einteilig realisiert sein. Auf diese Weise kann das Skelett besonders stabil realisiert werden.

Das Rahmenelement kann in Ausführungen auch als von dem Skelett separates Bauteil realisiert sein.

Vorteilhafterweise kann sich das Rahmenelement ausgehend von dem zumindest einen freiliegenden Abschnitt wenigstens abschnittsweise in Axialrichtung in Richtung der Anströmseite und/oder nach radial innen erstrecken und/oder das Rahmenelement wenigstens abschnittsweise von Material der umlaufenden Dichtung umschlossen sein.

Vorteilhafterweise kann sich das Rahmenelement wenigstens abschnittsweise in Axialrichtung in Richtung der Anströmseite und/oder nach radial innen erstrecken. Auf diese Weise kann eine Stabilisierung für wenigstens einen Filtermediumkörper realisiert werden. Ferner kann auf diese Weise ein Teil des Rahmenelements als Gießschale für Material der Dichtung dienen.

Alternativ oder zusätzlich kann vorteilhafterweise das Rahmenelement wenigstens abschnittsweise von Material der umlaufenden Dichtung umschlossen sein. Auf diese Weise kann eine Stützwirkung für die Dichtung verbessert werden.

Vorteilhafterweise kann in einem Zustand der Filtervorrichtung, in dem das wenigstens eine Filterelement in dem wenigstens einen Filterelementaufnahmeraum angeordnet und das zweite Gehäuseteil von dem ersten Gehäuseteil gelöst ist, ein Radialspalt zwischen der Innenmantelfläche des ersten Gehäuseteils und der radial äußeren Umfangsseite des zumindest anteilig radial dichtend wirkenden umlaufenden Dichtabschnitts vorliegen. Auf diese Weise kann das wenigstens eine Filterelement in axialer Richtung in den Filterelementaufnahmeraum hinein oder aus diesem heraus bewegt werden, ohne dass der radial dichtend wirkende umlaufende Dichtabschnitt an der Innenmantelfläche des ersten Gehäuseteils reibt, wodurch die Montagekräfte minimiert werden können.

Vorteilhafterweise kann der Filtermediumkörper eine Querschnittsform aufweisen, die zumindest zwei gebogene Seiten aufweist, die durch zwei insbesondere gerade Seiten verbunden sind, und/oder der Filtermediumkörper einen radial äußeren Filtermediumabschnitt und einen radial inneren Filtermediumabschnitt aufweisen, welche jeweils bezüglich der Achse umlaufend zusammenhängend sind, wobei der radial innere Filtermediumabschnitt innerhalb des radial äußeren Filtermediumabschnitts angeordnet ist, und/oder ein Außenmantel des Filtermediumkörpers, insbesondere eines radial äußeren Filtermediumabschnitts des Filtermediumkörpers, einen lang-ovalen Querschnitt aufweisen, und/oder ein Innenmantel des Filtermediumkörpers, insbesondere eines radial inneren Filtermediumabschnitts des Filtermediumkörpers, einen lang-ovalen Querschnitt aufweisen, und/oder sich ein Außenmantel des Filtermediumkörpers, insbesondere eines radial äußeren Filtermediumabschnitts des Filtermediumkörpers, von der Anströmseite in Richtung der Achse betrachtet verjüngen, insbesondere konisch verjüngen, und/oder sich ein Innenmantel des Filtermediumkörpers, insbesondere eines radial inneren Filtermediumabschnitts des Filtermediumkörpers, von der Abströmseite in Richtung der Achse betrachtet verjüngen, insbesondere konisch verjüngen. Auf diese Weise kann ein Filtermedium realisiert werden, welches ein verbessertes Verhältnis zwischen Platzbedarf und Filterfläche aufweist.

Vorteilhafterweise kann ein Filtermediumabschnitt als Filterbalg realisiert sein. Bei einem Filterbalg kann das Filtermedium gefaltet sein. Auf diese Weise kann eine Vergrößerung der aktiven Filterfläche erreicht werden.

Vorteilhafterweise kann wenigstens ein Filtermediumabschnitt des Filtermediumkörpers, insbesondere ein radial äußerer Filtermediumabschnitt des Filtermediumkörpers, von radial innen nach radial außen durchströmbar sein und/oder wenigstens ein Filtermediumabschnitt des Filtermediumkörpers, insbesondere ein radial innerer Filtermediumabschnitt des Filtermediumkörpers, von radial außen nach radial innen durchströmbar sein. Auf diese Weise kann ein Verhältnis zwischen axialer Ausdehnung und radialer Ausdehnung des Filterelements verbessert werden. So kann ein in axialer Richtung im Verhältnis zur radialen Ausdehnung lang gestrecktes Filterelement realisiert werden.

Vorteilhafterweise kann der wenigstens eine Filtermediumkörper zumindest zwei Filterbälge, insbesondere einen inneren Filterbalg und einen äußeren Filterbalg, insbesondere zumindest zwei gefaltete Filterbälge, umfassen, welche wenigstens teilweise um die Achse verlaufen und die parallel mit zu reinigendem gasförmigem Medium durchströmbar sind, und/oder ein innerer Filterbalg des wenigstens einen Filtermediumkörpers in einem von einem äußeren Filterbalg des wenigstens einen Filtermediumkörpers umschlossenen Innenraum angeordnet sein und/oder der wenigstens eine Filtermediumkörper wenigstens ein Filterbalg, insbesondere einen inneren Filterbalg und/oder einen äußeren Filterbalg, aufweisen, der eine Neigung gegenüber der Achse aufweist. Durch den Einsatz von mehreren Filterbälgen und deren besondere Anordnung zueinander kann insgesamt ein Verhältnis des Platzbedarfs zu der durchströmbaren aktiven Filterfläche verbessert werden.

"Parallel durchströmbar" bedeutet in diesem Zusammenhang, dass die Filterbälge funktional, insbesondere bezüglich der Strömung des gasförmigen Mediums, parallel wirkend angeordnet sind. Es bedeutet nicht, dass die Filterbälge parallel im geometrischen Sinne angeordnet sind. Die Filterbälge werden parallel von zu reinigendem gasförmigem Medium durchströmt. Im Unterschied dazu werden bei einer seriellen Anordnung der Filterbälgen diese nacheinander, also seriell, durchströmt.

Vorteilhafterweise kann die Filtervorrichtung wenigstens ein weiteres Filterelement, insbesondere ein Sekundärfilterelement, aufweisen, welches dem wenigstens einen Filterelement, insbesondere einem Hauptfilterelement, mit der umlaufenden Dichtung, strömungstechnisch nachgeschaltet ist. Auf diese Weise kann die Abscheidung von Partikeln aus dem zu reinigenden gasförmigen Medium weiter verbessert werden und alternativ oder zusätzlich ein Eintrag von Verschmutzungen auf eine Reinseite beim Service des Hauptfilterelements vermieden werden.

Vorteilhafterweise kann das wenigstens eine weitere Filterelement, insbesondere das Sekundärfilterelement, in dem Filterelementaufnahmeraum räumlich zwischen dem Filterelement mit der wenigstens einen umlaufenden Dichtung und der wenigstens einen Auslassöffnung des Filtergehäuses angeordnet sein. Auf diese Weise kann die Filtervorrichtung kompakter aufgebaut werden.

Vorteilhafterweise kann ein Filterelement für eine Filtervorrichtung für gasförmige Medien, insbesondere für Luft, insbesondere für eine erfindungsgemäße Filtervorrichtung, wenigstens einen Filtermediumkörper aufweisen,
- wobei die Filtervorrichtung ein Filtergehäuse mit wenigstens einer Einlassöffnung und wenigstens einer Auslassöffnung umfasst,
- wobei das Filterelement in dem Filtergehäuse zwischen der Einlassöffnung und der Auslassöffnung aufnehmbar ist, um eine der wenigstens einen Einlassöffnung zugeordnete Rohseite von einer der wenigstens einen Auslassöffnung zugeordneten Reinseite zu trennen,
- und wobei das Filtergehäuse ein erstes Gehäuseteil umfasst, an dem die Auslassöffnung angeordnet ist und das wenigstens einen Filterelementaufnahmeraum aufweist, in dem das wenigstens eine Filterelement anordenbar ist,
- und wobei das Filtergehäuse ein zweites Gehäuseteil umfasst, an dem die Einlassöffnung angeordnet ist und das wenigstens Teile wenigstens eines Zyklonabscheiders aufweist,
- wobei das zweite Gehäuseteil eine Serviceöffnung des ersten Gehäuseteils verschließt und das erste Gehäuseteil und das zweite Gehäuseteil lösbar miteinander verbunden und voneinander trennbar sind, um das wenigstens eine Filterelement durch die Serviceöffnung des ersten Gehäuseteils entnehmen zu können.

Vorteilhafterweise kann das wenigstens eine Filterelement an einer dem zweiten Gehäuseteil zuwendbaren Anströmseite eine um eine gedachte Achse umlaufende Dichtung aufweisen, die einen zumindest anteilig radial zur Achse dichtend wirkenden, um die Achse umlaufenden Dichtabschnitt aufweist, wobei eine bezüglich der Achse radial äußere Umfangsseite des Dichtabschnitts an einer bezüglich der Achse radial inneren Innenmantelfläche des ersten Gehäuseteils dichtend anlegbar ist, wobei von einer von dem zweiten Gehäuseteil zumindest mit einer Richtungskomponente in axialer Richtung abstehenden, die Achse zumindest teilweise umlaufenden Rippe eine Anpresskraft auf die umlaufende Dichtung ausübbar ist, um den zumindest anteilig radial dichtend wirkbaren umlaufenden Dichtabschnitt an die Innenmantelfläche des ersten Gehäuseteils zu pressen.

Vorteilhafterweise kann das Filterelement umfassend zumindest einen Filtermediumkörper in einer erfindungsgemäßen Filtervorrichtung für gasförmige Medien verwendet werden.

Vorteilhafterweise kann das Filterelement an einer einem zweiten Gehäuseteil der Filtervorrichtung zugewandten Anströmseite eine umlaufende Dichtung aufweisen, die einen bezüglich einer gedachten Achse zumindest anteilig radial dichtend wirkenden umlaufenden Dichtabschnitt aufweist, der mit einer bezüglich der Achse radial äußeren Umfangsseite an einer bezüglich der Achse radial inneren Innenmantelfläche des ersten Gehäuseteils dichtend anliegt, wobei eine von dem zweiten Gehäuseteil zumindest mit einer Richtungskomponente in axialer Richtung abstehende zumindest teilweise umlaufende Rippe eine Anpresskraft auf die umlaufende Dichtung ausübt, um den zumindest anteilig radial dichtend wirkenden umlaufenden Dichtabschnitt an die Innenmantelfläche des ersten Gehäuseteils zu pressen.

Vorteilhafterweise kann bei einem Verfahren zum Zusammenbau einer Filtervorrichtung für gasförmige Medien, insbesondere einer erfindungsgemäßen Filtervorrichtung, wenigstens ein Filterelement durch eine Serviceöffnung in einen Filterelementaufnahmeraum eines ersten Gehäuseteils, welches wenigstens eine Auslassöffnung für gereinigtes gasförmiges Medium aufweist, eines Filtergehäuses der Filtervorrichtung eingebracht werden und anschließend die Serviceöffnung mit einem zweiten Gehäuseteil des Filtergehäuses, welches wenigstens eine Einlassöffnung für zu reinigendes gasförmiges Medium und wenigstens Teile wenigstens eines Zyklonabscheiders aufweist, verschlossen werden.

Vorteilhafterweise kann eine an einer dem zweiten Gehäuseteil zugewandten Anströmseite des wenigstens einen Filterelements um eine gedachte Achse umlaufende Dichtung mit einer von dem zweiten Gehäuseteil zumindest mit einer Richtungskomponente in bezüglich der Achse axialer Richtung abstehende, die Achse zumindest teilweise umlaufende Rippe zumindest anteilig radial dichtend wirkend an eine bezüglich der Achse radial innere Innenmantelfläche des ersten Gehäuseteils gepresst werden.

Vorteilhafterweise kann das wenigstens eine Filterelement einfach ohne Krafteinwirkung in das Filtergehäuse eingebracht werden.

Vorteilhafterweise können der Einbau des Filterelements in den Filterelementaufnahmeraum des ersten Gehäuseteils und der Anbau des zweiten Gehäuseteils an das erste Gehäuseteil in bezüglich der Achse axialer Richtung durchgeführt werden.

Vorteilhafterweise kann eine Verspannung der umlaufenden Dichtung mittels Spannmitteln erfolgen, welche zwischen dem ersten Gehäuseteil und dem zweiten Gehäuseteil angreifen.

Im Übrigen gelten die im Zusammenhang mit dem erfindungsgemäßen Filterelement, der erfindungsgemäßen Filtervorrichtung, der erfindungsgemäßen Verwendung und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrische Darstellung einer Filtervorrichtung für gasförmige Medien mit einem Zyklonblock auf die Seite eines Auslassstutzens betrachtet;
- Figur 2: eine isometrische Darstellung der Filtervorrichtung aus der Figur 1 ohne den Zyklonblock auf eine Einströmseite eines Hauptfilterelements der Filtervorrichtung betrachtet;
- Figur 3: eine Explosionsdarstellung der Filtervorrichtung aus den Figuren 1 und 2;
- Figur 4: eine Detailansicht einer Tauchrohrplatte des Zyklonblocks der Filtervorrichtung aus den Figuren 1 bis 3 im Bereich einer umfangsmäßigen Rippe;
- Figur 5: eine Detailansicht des Hauptfilterelements der Filtervorrichtung aus den Figuren 1 bis 3 im Bereich einer umfangsmäßigen Dichtung;
- Figur 6: einen Längsschnitt durch die Filtervorrichtung aus den Figuren 1 bis 3;
- Figur 7: eine Detailansicht des Längsschnitts der Filtervorrichtung aus Figur 6 im Bereich der umfangsmäßigen Dichtung des Hauptfilterelements;
- Figur 8: einen Längsschnitt durch die Filtervorrichtung aus den Figuren 1 bis 3 ohne ein Zyklongehäuse des Zyklonblocks;
- Figur 9: eine Detailansicht des Längsschnitts der Filtervorrichtung aus Figur 8 im Bereich der umfangsmäßigen Dichtung des Hauptfilterelements;
- Figur 10: einen Längsschnitt durch die Filtervorrichtung aus den Figuren 1 bis 3 ohne den Zyklonblock;
- Figur 11: eine Detailansicht des Längsschnitts der Filtervorrichtung aus der Figur 10 im Bereich der umfangsmäßigen Dichtung des Hauptfilterelements;
- Figur 12: eine isometrische Darstellung eines Gehäusetopfs der Filtervorrichtung aus den Figuren 1 und 3 mit Betrachtung auf eine Serviceöffnung, wobei in dem Gehäusetopf ein Nachfilterelement angeordnet ist;
- Figur 13: eine Darstellung des Gehäusetopfs aus der Figur 12 mit axialer Betrachtungsrichtung auf die Serviceöffnung;
- Figur 14: einen Längsschnitt durch den Gehäusetopf aus den Figuren 12 und 13 mit dem Nachfilterelement entlang einer Schnittlinie XIV-XIV aus Figur 13;
- Figur 15: eine Detailansicht des Längsschnitts aus der Figur 14 im Bereich eines die Serviceöffnung umgebenen Bundes des Gehäusetopfs;
- Figur 16: eine isometrische Darstellung eines Skeletts des Hauptfilterelements der Filtervorrichtung aus den Figuren 1 bis 3 mit Betrachtungsrichtung auf die Anströmseite des Hauptfilterelements;
- Figur 17: eine isometrische Darstellung des Skeletts aus der Figur 16 mit Betrachtungsrichtung auf die Abströmseite des Hauptfilterelements;
- Figur 18: eine Seitenansicht auf eine Kurzseite des Skeletts aus den Figuren 16 und 17;
- Figur 19: eine Seitenansicht auf eine lange Seite des Skeletts aus den Figuren 16 bis 18;
- Figur 20: eine isometrische Darstellung des Hauptfilterelements der Filtervorrichtung aus den Figuren 1 bis 3 mit Betrachtungsrichtung auf eine Abströmseite;
- Figur 21: eine isometrische Darstellung des Hauptfilterelements der Filtervorrichtung aus den Figuren 1 bis 3 mit Betrachtungsrichtung auf eine Anströmseite;
- Figur 22: eine Seitenansicht auf eine Langseite des Hauptfilterelements der Filtervorrichtung aus den Figuren 1 bis 3;
- Figur 23: eine Seitenansicht auf eine Kurzseite des Hauptfilterelements der Filtervorrichtung aus den Figuren 1 bis 3.

In den Figuren sind gleiche Bauteile mit gleichen Bezugszeichen versehen.

### Ausführungsform(en) der Erfindung

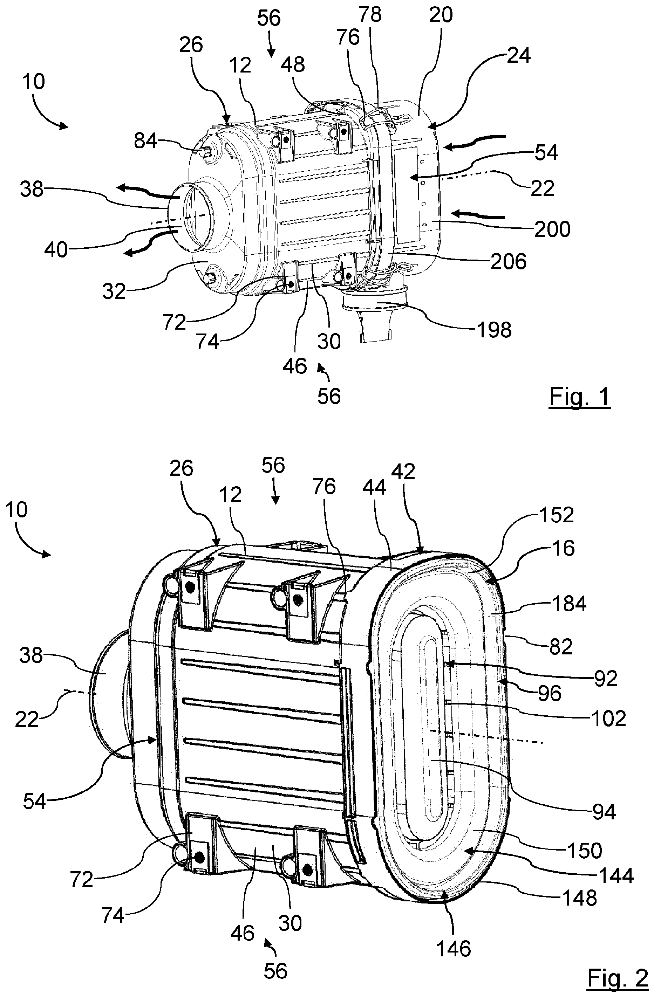

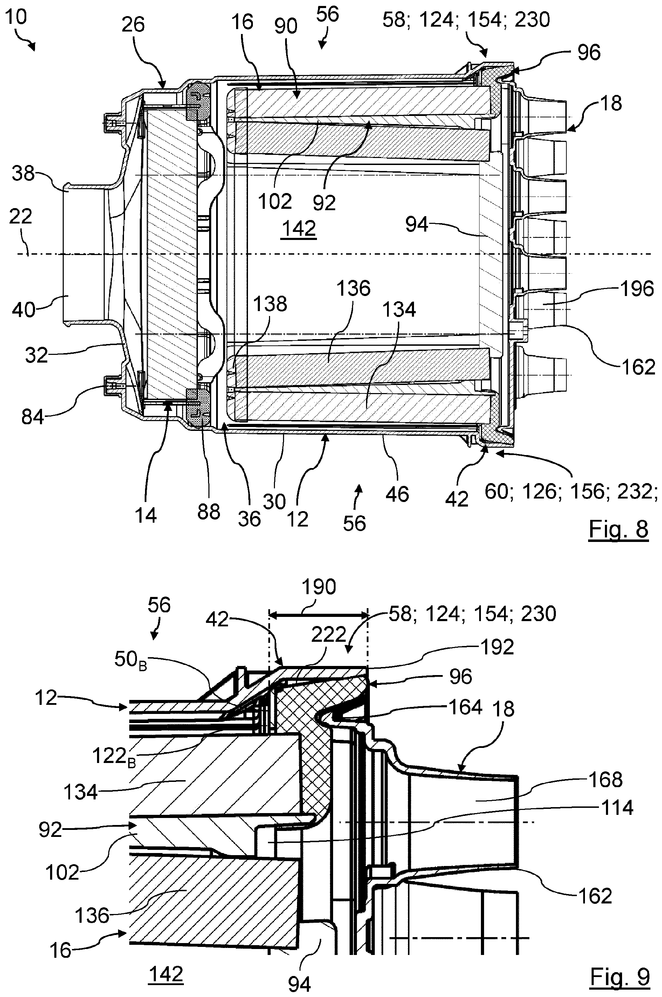

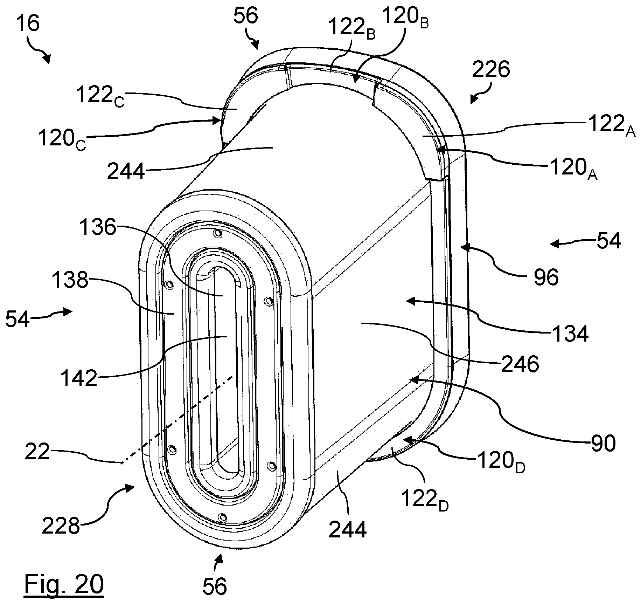

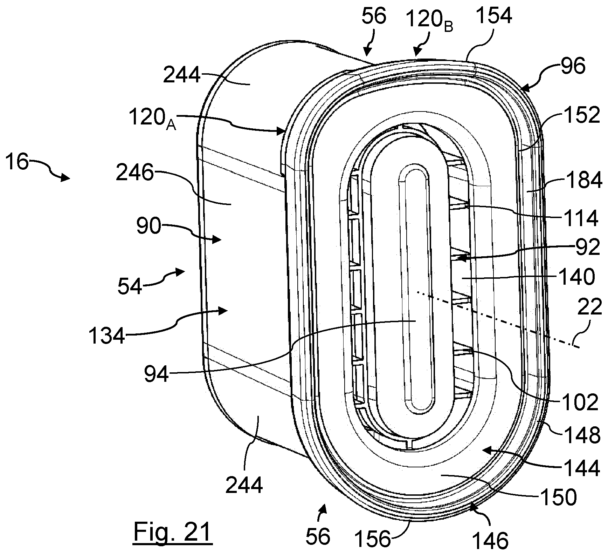

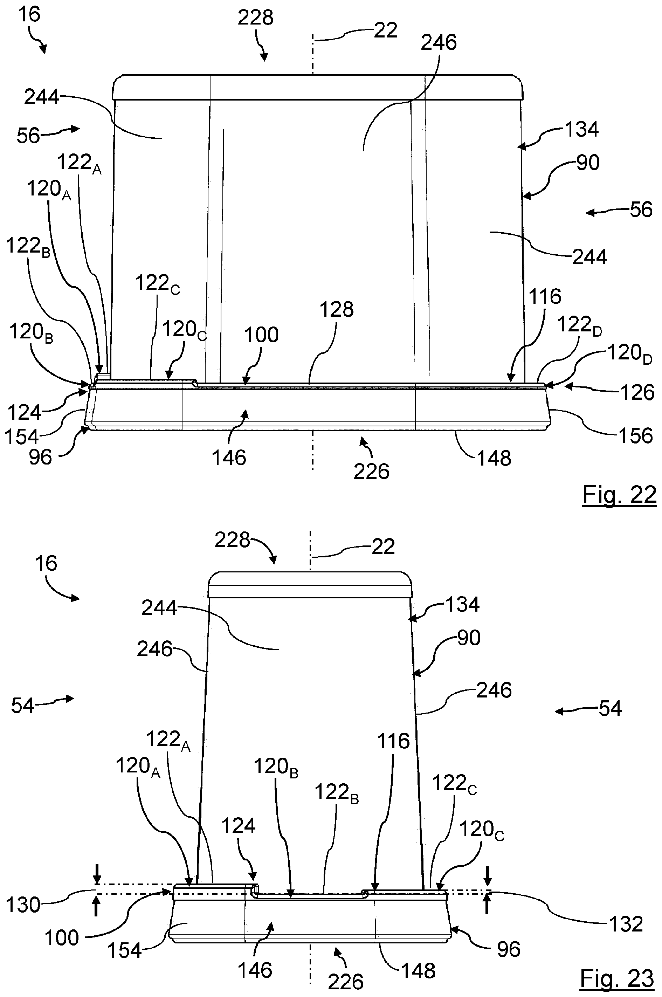

In den Figuren 1 bis 23 sind eine Filtervorrichtung 10 für gasförmige Medien und deren Komponenten in unterschiedlichen Darstellungen gezeigt. Mit der Filtervorrichtung 10 können gasförmige Medien, beispielsweise Luft, von festen Partikeln, beispielsweise Staub, befreit werden.

Die Filtervorrichtung 10 kann bei Fahrzeugen, beispielsweise Kraftfahrzeugen, bei Bau- und/oder Landmaschinen, Kompressoren in Verbindung mit Verbrennungsmotoren, bei Kathodenfiltern, beispielsweise in Verbindung mit Brennstoffzellen, oder dergleichen Verwendung finden.

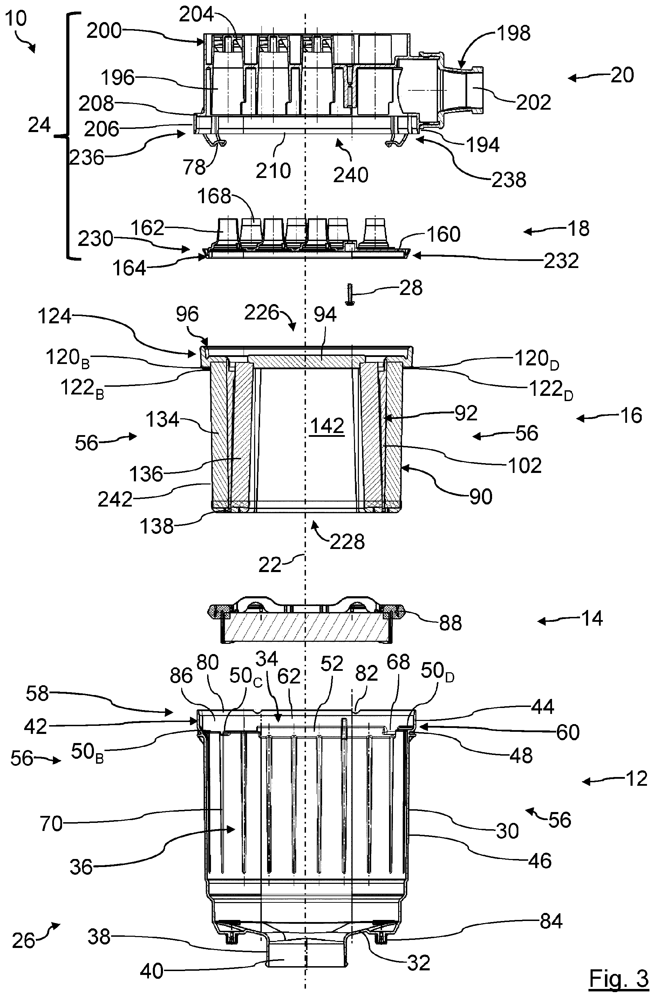

Die Filtervorrichtung 10 umfasst, wie beispielsweise in einer Explosionsdarstellung in der Figur 3 gezeigt, einen Gehäusetopf 12, ein Nachfilterelement 14, ein Hauptfilterelement 16, eine Tauchrohrplatte 18 und ein Zyklongehäuse 20. Die Filtervorrichtung 10 ist insgesamt bezüglich einer Achse 22 axial aufgebaut.

Im Folgenden werden die Komponenten der Filtervorrichtung 10 und deren Anordnung zueinander in Bezug auf die gedachte Achse 22 beschrieben. Die Achse 22 kann mit einer Gehäuseachse des Gehäusetopfes 12, einer Einbau-/Ausbauachse des Nachfilterelements 14 und des Hauptfilterelements 16 in den Gehäusetopf 12 beziehungsweise aus dem Gehäusetopf 12, einer Verbindungsachse der Tauchrohrplatte 18 mit dem Gehäusetopf 12, einer Verbindungsachse des Zyklongehäuses 20 mit der Tauchrohrplatte 18, einer Verbindungsachse des Zyklongehäuses 20 mit dem Gehäusetopf 12, einer Elementachse des Nachfilterelements 14, einer Elementachse des Hauptfilterelements 16, einer Gehäuseachse des Gehäusetopfes 12, einer Plattenachse der Tauchrohrplatte 18 und einer Gehäuseachse des Zyklongehäuses 20 zusammenfallen. Wenn bei der Beschreibung von "radial", "koaxial", "axial", "tangential", "umfangsmäßig", "konzentrisch", "exzentrisch" oder dergleichen die Rede ist, so bezieht sich dies, sofern nicht anders erwähnt, auf die Achse 22. "Umfangsmäßig" bezieht sich dabei auf den Verlauf von jeweiligen gedachten Mantelflächen, welche die Achse 22 umgeben.

Im verbundenen Zustand bilden die Tauchrohrplatte 18 und das Zyklongehäuse 20 einen Zyklonblock 24. Andererseits bilden der Gehäusetopf 12 als ein erstes Gehäuseteil und die Tauchrohrplatte 18 als ein zweites Gehäuseteil in verbundenem Zustand ein Filtergehäuse 26. Bei montierter Filtervorrichtung 10 ist die Tauchrohrplatte 18 mittels Schrauben 28 mit dem Zyklongehäuse 20 verbunden.

Im Folgenden wird der Gehäusetopf 12 unter Zuhilfenahme der Figuren 3 und 12 bis 15 näher erläutert.

Der Gehäusetopf 12 ist einteilig realisiert. Der Gehäusetopf 12 besteht beispielsweise aus Kunststoff, beispielsweise einem Hartkunststoff.

Der Gehäusetopf 12 verfügt über eine Gehäusewand 30, welche die Achse 22 zusammenhängend umgibt. Auf einer axialen Stirnseite des Gehäusetopfs 12 schließt sich an die Gehäusewand 30 ein Gehäuseboden 32 an. Auf der dem Gehäuseboden 32 axial abgewandten Seite umgibt die Gehäusewand 30 eine Serviceöffnung 34.

Die Gehäusewand 30 und der Gehäuseboden 32 begrenzen einen Filterelementaufnahmeraum 36 des Gehäusetopfs 12. In dem Filterelementaufnahmeraum 36 sind bei montierter Filtervorrichtung 10 das Nachfilterelement 14 und das Hauptfilterelement 16 angeordnet. Das Nachfilterelement 14 und das Hauptfilterelement 16 können dabei durch die Serviceöffnung 34 in den Filterelementraum 36 eingebracht und aus diesem entnommen werden.

In den Gehäuseboden 32 ist ein Auslassstutzen 38 integriert. Der Auslassstutzen 38 weist eine Auslassöffnung 40 für gereinigtes gasförmiges Medium auf. Der Auslassstutzen 38 verläuft beispielhaft axial zur Achse 22. Beispielhaft hat der Auslassstutzen 38 eine kreiszylindrische Form.

Im Bereich axial neben dem Gehäuseboden 32 auf der der Serviceöffnung 34 axial zugewandten Seite ist die Gehäusewand 30 zweifach nach radial außen abgestuft. Insgesamt verjüngt sich so der Gehäusetopf 12 in axialer Richtung zum Gehäuseboden 32 hin. Der abgestufte Bereich bildet einen Aufnahmebereich für das Nachfilterelement 14. Der zwischen dem abgestuften Bereich und der Serviceöffnung 34 befindliche Bereich des Filterelementaufnahmeraums 36 dient der Aufnahme des Hauptfilterelements 16.

Senkrecht zur Achse 32 betrachtet weist die Gehäusewand 30 einen lang-ovalen Querschnitt auf.

Auf der axialen Seite mit der Serviceöffnung 34 weist die Gehäusewand 30 einen Bund 42 auf, welcher die Achse 22 zusammenhängend umgibt.

In axialer Richtung betrachtet weist der Bund 42 einen lang-ovalen Querschnitt auf. Der lang-ovale Querschnitt des Bundes 42 unterscheidet sich jedoch von dem lang-ovalen Querschnitt der Gehäusewand 30 zwischen dem Bund 42 und dem Gehäuseboden 32. Die Gehäusewand 30 ist im Bereich zwischen dem Gehäuseboden 32 und dem Bund 42 bezüglich einer Rotation um die Achse 22 um 180° symmetrisch. Im Unterschied dazu weist die Bundwand 44 keine Rotationssymmetrien bezüglich der Achse 22 auf. Dies wird weiter unten noch näher erläutert.

Die Bundwand 44 ist gegenüber einem Hauptwandabschnitt 46 der Gehäusewand 30 nach radial außen versetzt. Der Hauptwandabschnitt 46 erstreckt sich in axialer Richtung zwischen dem Bund 42 und dem Gehäuseboden 32.

Zwischen dem Hauptwandabschnitt 46 und der Bundwand 44 erstreckt sich ein Kragen 48.

Der Kragen 48 verfügt an seiner dem Filterelementaufnahmeraum 36 zugewandten axial gerichteten Innenseite über mehrere Anlageflächen 50. Die Anlageflächen 50 sind umfangsmäßig entlang des Kragens 48 verteilt in jeweiligen Bundabschnitten des Bundes 42 angeordnet. Der einfacheren Unterscheidung wegen können im Folgenden die Bezugszeichen der Anlageflächen 50 mit den Indices A, B, C oder D versehen sein, also 50_{A}, 50_{B}, 50c oder 50_{D} lauten.

Zwischen der Anlagefläche 50_{A} und der Anlagefläche 50_{D} ist eine Rampenfläche 52 angeordnet. Auf der radial gegenüberliegenden Seite ist zwischen der Anlagefläche 50c und der Anlagefläche 50_{D} eine weitere Rampenfläche 52 angeordnet. Die beiden Rampenflächen 52 sind auf radial gegenüberliegenden Seiten angeordnet.

Die Anlageflächen 50 erstrecken sich in Umfangsrichtung und senkrecht zur Achse 22. Die Rampenflächen 52 erstrecken sich umfangsmäßig und sind zur Achse 22 in axialer Richtung von der Serviceöffnung 34 aus betrachtet auf die Achse 22 zu geneigt.

Die Rampenflächen 52 des Bundes 42 erstrecken sich entlang von Langseiten 54 der insgesamt in axialer Richtung betrachtet lang-ovalen Filtervorrichtung 10. Zwischen den Langseiten 54 erstrecken sich jeweilige Kurzseiten 56.

Im Folgenden werden der besseren Übersichtlichkeit wegen für die Komponenten der Filtervorrichtung 10, welche einen lang-ovalen Querschnitt aufweisen, die Bezeichnungen Langseiten 54 und Kurzseiten 56 verwendet.

An einer der Kurzseiten 56 der Bundwand 44 erstreckt sich ein flach gebogener Abschnitt 58. Auf der der Achse 22 gegenüberliegenden Kurzseite 56 erstreckt sich ein kreisförmig gebogener Abschnitt 60 der Bundwand 44. Der flach gebogene Abschnitt 58 hat einen größeren Krümmungsradius als der kreisförmig gebogene Abschnitt 60. Zwischen dem flach gebogenen Abschnitt 58 und dem kreisförmig gebogenen Abschnitt 60 erstreckt sich entlang der Langseiten 54 jeweils ein gerader Verbindungsabschnitt 62 der Bundwand 44.

Im Bereich des flach gebogenen Abschnitts 58 befinden sich die drei Anlageflächen 50_{A}, 50_{B} und 50c. Die vierte Anlagefläche 50_{D} befindet sich auf der Seite des kreisförmig gebogenen Abschnitts 60. Die beiden seitlichen Anlageflächen 50_{A} und 50c erstrecken sich jeweils von dem Übergang des jeweiligen geraden Verbindungsabschnitts 62 zu dem flach gebogenen Abschnitt 58 bis zu der dritten Anlagefläche 50_{B}. Die dritte Anlagefläche 50_{B} erstreckt sich zwischen den seitlichen Anlageflächen 50_{A} und 50c.

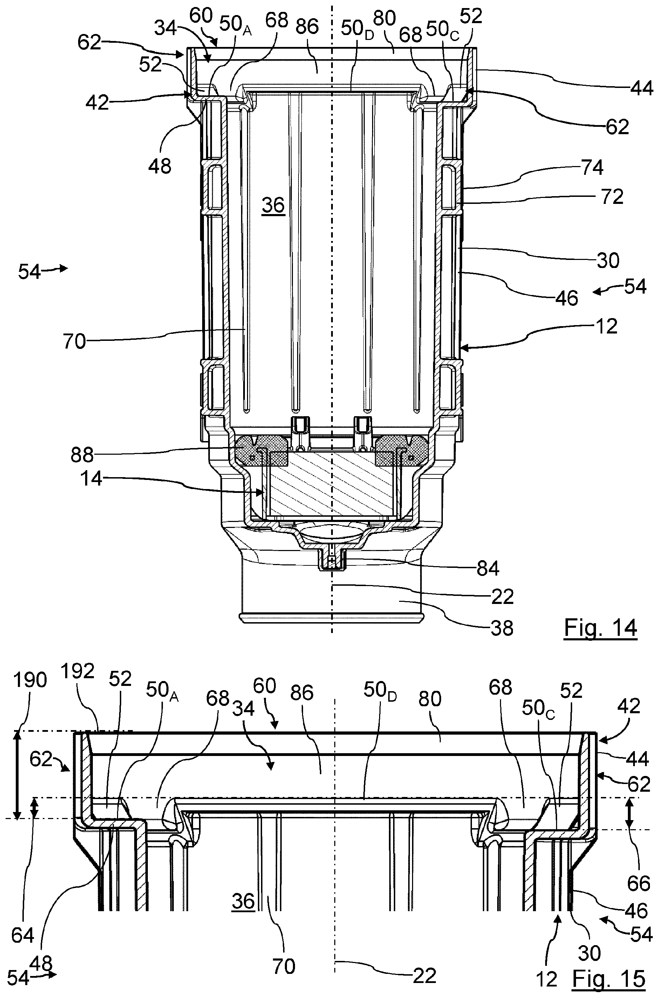

Die mittlere Anlagefläche 50_{B} aufseiten des flach gebogenen Abschnitts 58 und die Anlagefläche 50_{D} aufseiten des kreisförmig gebogenen Abschnitts 60 befinden sich auf der gleichen axialen Höhe. Die Anlageflächen 50_{A}, 50_{B} und 50c aufseiten des flachgebogenen Abschnitts 58 befinden sich, wie beispielsweise in den Figuren 14 und 15 erkennbar, auf unterschiedlich axialen Höhen. Die mittlere Anlagefläche 50_{B} und die Anlagefläche 50_{D} befinden sich in axialer Richtung betrachtet näher an dem freien Rand der Bundwand 44 als die beiden äußeren Anlageflächen 50_{A} und 50c. Ein axialer Abstand 64 zwischen der Anlagefläche 50_{D} und der Anlagefläche 50_{A} ist kleiner als ein Abstand 66 zwischen der Anlagefläche 50_{D} und der Anlagefläche 50c.

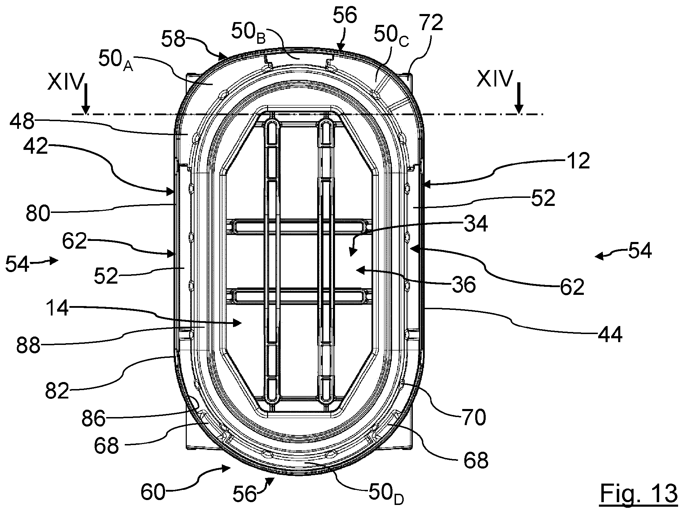

Die Anlagefläche 50_{D} erstreckt sich umfangsmäßig, wie beispielsweise in der Figur 13 erkennbar, im Zentrum des kreisförmig gebogenen Abschnitts 60 aufseiten des kreisförmig gebogenen Abschnitts 60 etwa über einen Umfangswinkel von etwa 90° um einen nicht gezeigten Kreismittelpunkt des kreisförmig gebogenen Abschnitts 60.

Zwischen der Anlagefläche 50_{D} und jeder der benachbarten Rampenflächen 52 befindet sich jeweils eine Einbuchtung 68. Die Einbuchtungen 68 erstrecken sich jeweils in axialer und radialer Richtung entlang der Bundwand 44. Die Rampenflächen 52 erstrecken sich entlang der Bundwand 44 von den jeweiligen geraden Verbindungsabschnitte 62 bis in die jeweiligen kreisförmig gebogenen Abschnitte 60.

In dem Hauptwandabschnitt 46 der Gehäusewand 30 erstreckt sich eine Vielzahl von Rillen 70 jeweils etwa axial von dem Kragen 48 bis kurz vor dem abgestuften Bereich der Gehäusewand 30. Die Rillen 70 sind entlang des Hauptwandabschnitts 46 umfangsmäßig verteilt angeordnet. Die Rillen 70 sind jeweils als Ausbuchtungen in dem Hauptwandabschnitt 46 nach radial außen realisiert. Jede der Rillen 70 bildet eine lang gestreckte Vertiefung an der radial inneren Seite des Hauptwandabschnitts 46. Außerdem bildet jede der Rillen 70 eine lang gestreckte Erhebung an der radial äußeren Seite des Hauptwandabschnitts 46. Je nach umfangsmäßiger Position öffnen sich die Rillen 70 hin zu den Anlageflächen 50 oder Rampenflächen 52. Die Querschnitte der Rillen 70 verjüngen sich jeweils in axialer Richtung betrachtet zum Gehäuseboden 32 hin.

Ferner sind an der radial äußeren Seite des Hauptwandabschnitts 46 insgesamt acht Befestigungsblöcke 72 angeordnet. Vier der Befestigungsblöcke 72 befinden sich dabei auf der dem Bund 42 axial zugewandten Seite des Hauptwandabschnitts 46. Die vier anderen Befestigungsblöcke 72 befinden sich auf der dem abgestuften Bereich neben dem Gehäuseboden 32 axial zugewandten Seite. An jedem der Befestigungsblöcke 72 ist auf der der entsprechenden Langseite 54 zugewandten Seite ein Schraubflansch 74 angeordnet. Die Schraubflansche 74 sind beispielhaft als ebene Bleche realisiert. Die Schraubflansche 74 auf einer gemeinsamen Langseite 54 verlaufen in einer Ebene. Jeder der Schraubflansche 74 weist ein Gewindeloch auf. Die Achsen der Gewindelöcher der Schraubflansche 74 verlaufen parallel zueinander. Über die Schraubflansche 74 kann die Filtervorrichtung 10 an entsprechenden Halteelementen befestigt werden. Die Halteelemente können beispielsweise fest mit der Maschine verbunden sein, bei der die Filtervorrichtung 10 verwendet wird.

Ferner sind auf der der Bundwand 44 axial abgewandten Außenseite des Kragens 48 an der Außenseite insgesamt vier Spannnasen 76 angeordnet. Die Spannnasen 76 erheben sich in axialer Verlängerung der Bundwand 44 von der Bundwand 44 weg. Zwei der Spannnasen 76 befinden sich im Bereich des flachgebogenen Abschnitts 58 in der Nähe der Übergänge des flach gebogenen Abschnitts 58 zu den jeweils benachbarten geraden Verbindungsabschnitten 62. Die zwei anderen Spannnasen 76 befinden sich im Bereich des kreisförmig gebogenen Abschnitts 60 in der Nähe der Übergänge zu den jeweils benachbarten geraden Verbindungsabschnitten 62. In axialer Richtung betrachtet fluchten die Spannnasen 76 jeweils mit den axial benachbarten Befestigungsblöcken 72. Die Spannnasen 76 dienen zum Angreifen von jeweiligen Spannklammern 78. Die Spannklammern 78 sind, wie weiter unten näher erläutert wird, an dem Zyklongehäuse 20 gelagert.

Zwischen dem Kragen 48 und dem freien Rand der Bundwand 44 weist die Bundwand 44 an der radial inneren Umfangsseite eine sich in Umfangsrichtung erstreckende Innenmantelfläche 86 auf. Auf der dem freien Rand der Bundwand 44 axial zugewandten Seite weist die Innenmantelfläche 86 einen Rampenabschnitt 80 auf. Im Rampenabschnitt 80 erstreckt sich die Innenmantelfläche 86 schräg zur Achse 22. Der radial innere Umfang der Bundwand 44 vergrößert sich im Rampenabschnitt 80 in axialer Richtung zum freien Rand hin. Der Rampenabschnitt 80 bildet so eine trichterförmige Einbauhilfe für das Nachfilterelement 14 und das Hauptfilterelement 16. Axial zwischen dem Rampenabschnitt 80 und dem Kragen 48 erstreckt sich die Innenmantelfläche 86 parallel zur Achse 22.

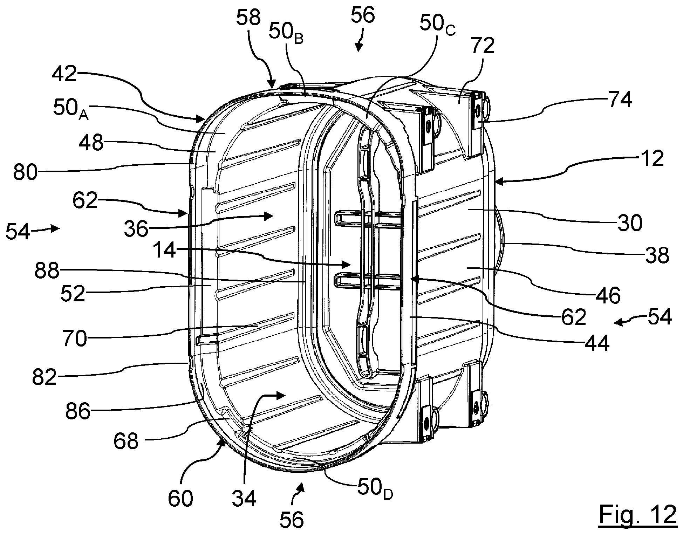

Ferner weist die Bundwand 44 vier, beispielsweise in den Figuren 12 und 13 erkennbare, Einbuchtungen 82 auf, die entlang des freien Randes der Bundwand 44 verteilt angeordnet sind. Die Einbuchtungen 82 vertiefen sich jeweils in den Rampenabschnitt 80 in axialer Richtung und erstrecken sich sowohl umfangsmäßig als auch in radialer Richtung. Zwei der Einbuchtungen 82 befinden sich jeweils an einer der Langseiten 54 an dem entsprechenden Übergang zwischen dem Verbindungsabschnitt 62 und dem flach gebogenen Abschnitt 58. Die beiden anderen Einbuchtungen 82 befinden sich an den Langseiten 54 an den Übergängen zwischen dem jeweiligen Verbindungsabschnitt 62 und dem kreisförmig gebogenen Abschnitt 60.

Auf der dem Filterelementaufnahmeraum 36 axial abgewandten Außenseite des Gehäusebodens 32 sind ferner zwei Nippel 84 angeordnet. Die Nippel erstrecken sich jeweils parallel zur Achse 22. Die Nippel 84 befinden sich auf radial gegenüberliegenden Seiten der Achse 22, jeweils neben den Kurzseiten 56 des Gehäusetopfs 12.

Das Nachfilterelement 14 ist beispielsweise als sogenanntes Flachfilterelement ausgestaltet. Das Nachfilterelement 14 dient als Sekundärfilterelement. In Richtung der Achse 22 betrachtet weist die radial äußere Seite des Nachfilterelements 14 eine lang-ovale Form auf. Der Verlauf der radial äußeren Mantelfläche des Nachfilterelements 14 entspricht der lang-ovalen Form der radial inneren Umfangsseite des Gehäusetopfs 12 in dem zweifach abgestuften Bereich neben dem Gehäuseboden 32. An einer seiner axialen Stirnseiten weist das Nachfilterelement 14 eine bezüglich der Achse 22 umlaufende Dichtung 88 auf. Mit der Dichtung 88 wird in eingebautem Zustand die Reinseite des Nachfilterelements 14 von der Rohseite getrennt.

Das Hauptfilterelement 16 wird im Folgenden insbesondere unter Betrachtung der Figuren 3, 5 und 16 bis 23, näher beschrieben.

Das Hauptfilterelement 16 umfasst einen Filtermediumkörper 90, ein Skelett 92, einen Endkörper 94 und eine Dichtung 96.

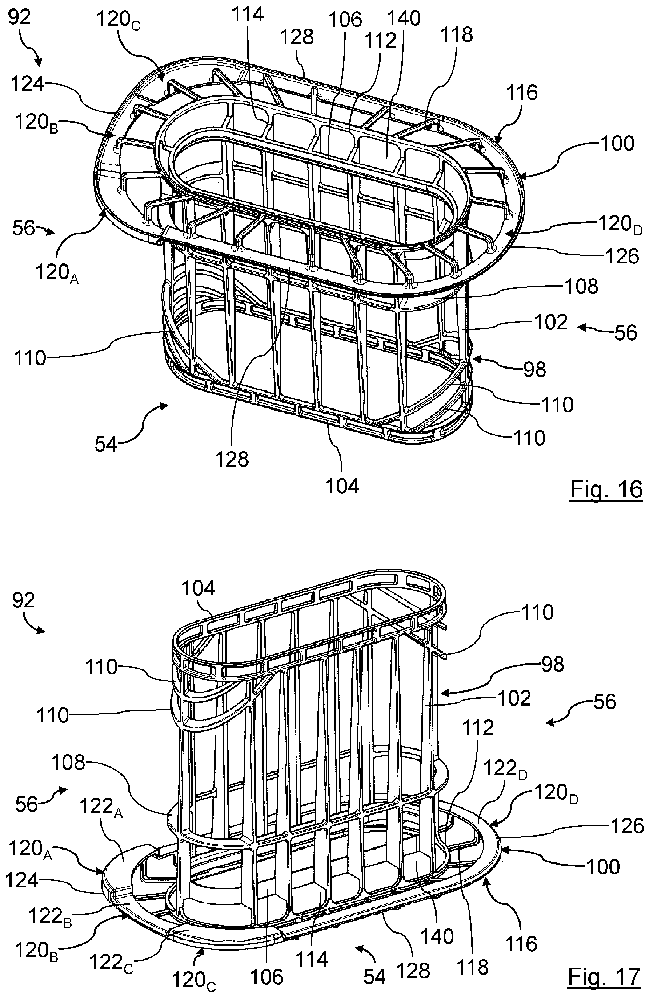

Das Skelett 92 ist im Detail in den Figuren 16 bis 19 gezeigt. Das Skelett 92 ist insgesamt einteilig realisiert. Beispielhaft ist das Skelett 92 als Spritzgussteil aus Hartkunststoff gefertigt.

Das Skelett 92 verfügt über ein Zentralelement 98 und ein Rahmenelement 100.

Das Zentralelement 98 dient als Stützelement, in welchem sich weiter unten näher erläuterte Filterbälge 134 und 136 abstützen. Das Zentralelement 98 umfasst eine Vielzahl von Axialstreben 102. Die Axialstreben 102 verlaufen jeweils etwa parallel zur Achse 22. Die Axialstreben 102 sind um die Achse 22 verteilt angeordnet. Auf einer axialen Seite des Skeletts 92 sind die dortigen Enden der Axialstreben 102 über einen Verbindungsring 104 miteinander verbunden.

**In** axialer Richtung betrachtet haben die Axialstreben 102 einen etwa rechteckigen Querschnitt. Die langen Seiten des rechteckigen Querschnitts jeder Axialstrebe 102 sind jeweils parallel zu einer Radialrichtung bezüglich der Achse 22 ausgerichtet. Die bezüglich der Achse 22 umfangsmäßigen Abmessungen der Axialstreben 102, also die Ausdehnung der kurzen Seiten des rechteckigen Querschnitts der Axialstreben 102, sind über ihre axialen Längen konstant. Die bezüglich der Achse 22 radialen Abmessungen der Axialstreben 102, also die Ausdehnung der langen Seiten des rechteckigen Querschnitts der Axialstreben 102, nimmt von dem dem Verbindungsring 104 zugewandten Ende in axialer Richtung betrachtet zu. Insgesamt sind die Axialstreben 102 bezüglich der Achse 22 umfangsmäßig betrachtet etwa keilförmig ausgestaltet.

Die bezüglich der Achse 22 radial äußeren Seiten der Axialstreben 102 sind jeweils von dem Rahmenelement 100 zu dem Verbindungsring 104 betrachtet zu der Achse 22 hin geneigt. So weist eine das Zentralelement 98 umgebende, radial äußere gedachte, von den radial äußeren Seiten der Axialstreben 102 aufgespannte Mantelfläche eine sich zum Verbindungsring 104 verjüngende, konische Form auf. Die gedachte, radial innere Mantelfläche, welche durch die Axialstreben 102 aufgespannt wird, weist eine sich von dem Verbindungsring 104 axial betrachtet zum Rahmen 100 hin verjüngende Form auf.

Der Verbindungsring 104 hat einen in axialer Richtung betrachtet lang-ovalen Querschnitt. Der Verbindungsring 104 weist zwei parallel verlaufende, koaxiale Ringabschnitte gleichen Umfangs auf, welche über axial verlaufende Streben miteinander verbunden sind.

Die dem Verbindungsring 104 axial gegenüberliegenden Enden der Axialstreben 102 sind mit einem radial inneren Ring 106 verbunden. Der radial innere Ring 106 erstreckt sich einerseits parallel und andererseits koaxial zu dem Verbindungsring 104. Der radial innere Ring 106 erstreckt sich zwischen den radial inneren Umfangsseiten der Enden der Axialstreben 102.

Zwischen dem radial inneren Ring 106 und dem Verbindungsring 104 ist ein Zwischenring 108 angeordnet. Der Zwischenring 108 verbindet die Axialstreben 102 miteinander. Der Zwischenring 108 erstreckt sich einerseits parallel und andererseits koaxial zu dem Verbindungsring 104 und dem radial inneren Ring 106. In radialer Ausdehnung erstreckt sich der Zwischenring 108 von den radial inneren Umfangsseiten der Axialstreben 102 bis zu den radial äußeren Umfangsseiten. Der Zwischenring 108 befindet sich in einem axialen Abstand zu dem radial inneren Ring 106, welcher etwa einem Drittel des axialen Abstands zwischen dem radial inneren Ring 106 und dem Verbindungsring 104 entspricht.

An den Kurzseiten 56 erstrecken sich jeweils zwei Verbindungsbögen 110. Jeder der Verbindungsbögen 110 ist mit seinen freien Enden mit dem Verbindungsring 104 verbunden. In der gebogenen Mitte ist jeder der Verbindungsbögen 110 mit einer zentralen Axialstrebe 102 verbunden. Die Verbindungsbögen 110 erstrecken sich jeweils von dem Verbindungsring 104 auf der dem Rahmenelement 100 axial zugewandten Seite schräg zur Achse 22 in Richtung zu der zentralen Axialstrebe 102. Auf jeder Kurzseite 56 ist einer der Verbindungsbögen 110 in einem axialen Abstand zu dem Verbindungsring 104 mit der zentralen Axialstrebe 102 verbunden, welcher etwa einem Fünftel des axialen Abstands zwischen dem Rahmenelement 100 und dem Verbindungsring 104 entspricht. Dieser Verbindungsbogen 110 verbindet den Verbindungsring 104 mit der zentralen Axialstrebe 102. Der andere Verbindungsbogen 110 auf der Kurzseite 56 ist in einem axialen Abstand zu dem Verbindungsring 104 mit der zentralen Axialstrebe 102 verbunden, welcher etwa einem Viertel des axialen Abstands zwischen dem Rahmenelement 100 und Verbindungsring 104 entspricht. Der letztere Verbindungsbogen 110 verbindet den Verbindungsring 104 mit der zentralen Axialstrebe 102 und den beiden zu der zentralen Axialstrebe 102 benachbarten Axialstreben auf den Kurzseiten 56.

An ihrem in radialer Richtung breiten Ende weisen die Axialstreben 102 auf der radial äußeren Seite eine Stufe auf, welche sich in axialer Richtung erhebt. Die Stufen der Axialstreben 102 sind mit einem äußeren Ring 112 verbunden.

Der radial äußere Ring 112 hat einen lang-ovalen Querschnitt. Der radial äußere Ring 112 verläuft koaxial zur Achse 22. Der radial äußere Ring 112 ist zu dem radial inneren Ring 106 axial beabstandet. Dies wird durch die Stufen erreicht.

Zwischen dem äußeren Ring 112 und dem radial inneren Ring 106 sind an den Enden der Axialstreben 102 jeweilige Verbindungsöffnungen 114 realisiert. Die VerbindungsÖffnungen 114 weisen die axiale Höhe der Stufen an den Enden der Axialstreben 102 auf. Über die Verbindungsöffnungen 114 sind axial verlaufende Strömungsräume 140, welche sich zwischen zwei benachbarten Axialstreben 102 befinden, auf Höhe des radial inneren Rings 106 miteinander verbunden.

Der radial äußere Ring 112 ist von einem Stützring 116 des Rahmenelements 100 umgeben. Der Stützring 116 verläuft koaxial zur Achse 22. Der Stützring 116 weist einen lang-ovalen Querschnitt auf, welcher sich von dem lang-ovalen Querschnitt des radial äußeren Rings 112, des radial inneren Rings 106 und des Verbindungsrings 104, wie weiter unten erläutert wird, unterscheidet.

Der Stützring 116 ist mit radial verlaufenden Radialstreben 118 mit dem radial äußeren Ring 112 verbunden. Die Radialstreben 118 weisen auf ihrer dem Stützring 116 zugewandten Seite jeweils einen Knick um etwa 90° in Richtung auf den Verbindungsring 104 zu auf. Die Enden der Radialstreben 118 hinter dem Knick greifen jeweils auf der dem Verbindungsring 104 axial abgewandten Seite des Stützrings 116 an.

Der Stützring 116 weist vier beispielsweise in den Figuren 17 bis 19 erkennbare Abstützabschnitte 120 auf. Die Bezugszeichen der Abstützabschnitte 120 sind der besseren Unterscheidung wegen mit den Indizes A, B, C und D versehen.

Die dem Verbindungsring 104 axial zugewandten Seiten der Abstützabschnitte 120 bilden jeweils eine Abstützfläche 122. Die Bezugszeichen der Abstützflächen 122 wie die Bezugszeichen der jeweiligen Abstützabschnitte 120 sind der einfacheren Unterscheidung wegen mit den Indizes A, B, C und D versehen. Die Abstützflächen 122 sind jeweils eben. Die Ebenen der Abstützflächen 122 erstrecken sich jeweils senkrecht zur Achse 22.

Insgesamt erstreckt sich das Rahmenelement 100 ausgehend von den Abstützabschnitten 120 nach radial innen und in Richtung auf eine Anströmseite 226 des Hauptfilterelements 16 zu.

Der Querschnitt der radial äußeren Umfangsseite des Stützrings 116 entspricht in seiner Form dem Querschnitt der radial inneren Umfangsseite der Bundwand 44 des Gehäusetopfs 12. Der radial äußere Umfang des Stützrings 116 ist etwas kleiner als der radial innere Umfang der Bundwand 44.

Der Stützring 116 weist einen an der radial äußeren Mantelseite flach gebogenen Abschnitt 124 und einen kreisförmig gebogenen Abschnitt 126 auf. Der flach gebogene Abschnitt 124 und der kreisförmig gebogene Abschnitt 126 sind über zwei gegenüberliegende, gerade Verbindungsabschnitte 128 miteinander verbunden. Der Krümmungsradius des flach gebogenen Abschnitts 124 ist größer als der Krümmungsradius des kreisförmig gebogenen Abschnitts 126. Insgesamt weist also der Stützring 116 und damit die radial äußere Mantelseite des Rahmenelements 100 keine Rotationssymmetrie bezüglich der Achse 22 auf.

Der zentrale Abstützabschnitt 120_{B} mit der zentralen Abstützfläche 122_{B} erstreckt sich im Zentrum des flach gebogenen Abschnitts 124 zwischen den beiden äußeren Abstützabschnitten 120_{A} und 120c mit den entsprechenden äußeren Abstützflächen 122_{A} und 122c. Die Abstützabschnitte 120_{A} und 120c mit ihren jeweiligen Abstützflächen 122_{A} und 122c erstrecken sich zwischen den jeweiligen geraden Verbindungsabschnitten 128. Die umfangsmäßige Erstreckung der beiden seitlichen Abstützabschnitte 120_{A} und 120c entspricht der umfangsmäßigen Erstreckung der beiden seitlichen Anlageflächen 50_{A} und 50c des Gehäusetopfs 12.

Der Abstützabschnitt 120_{D} mit seiner Abstützfläche 122_{D} erstreckt sich auf der dem zentralen Abstützabschnitt 120_{B} radial gegenüberliegenden Seite zentral in dem kreisförmig gebogenen Abschnitt 126. Die umfangsmäßige Erstreckung des Abstützabschnitts 120_{D} und der Abstützfläche 122_{D} ist größer als die umfangsmäßige Erstreckung der Anlagefläche 50_{D} des Gehäusetopfs 12.

Der Abstützabschnitt 120_{D} mit der Abstützfläche 122_{D} geht stufenlos in die jeweils benachbarten geraden Verbindungsabschnitte 128 des Stützrings 116 über.

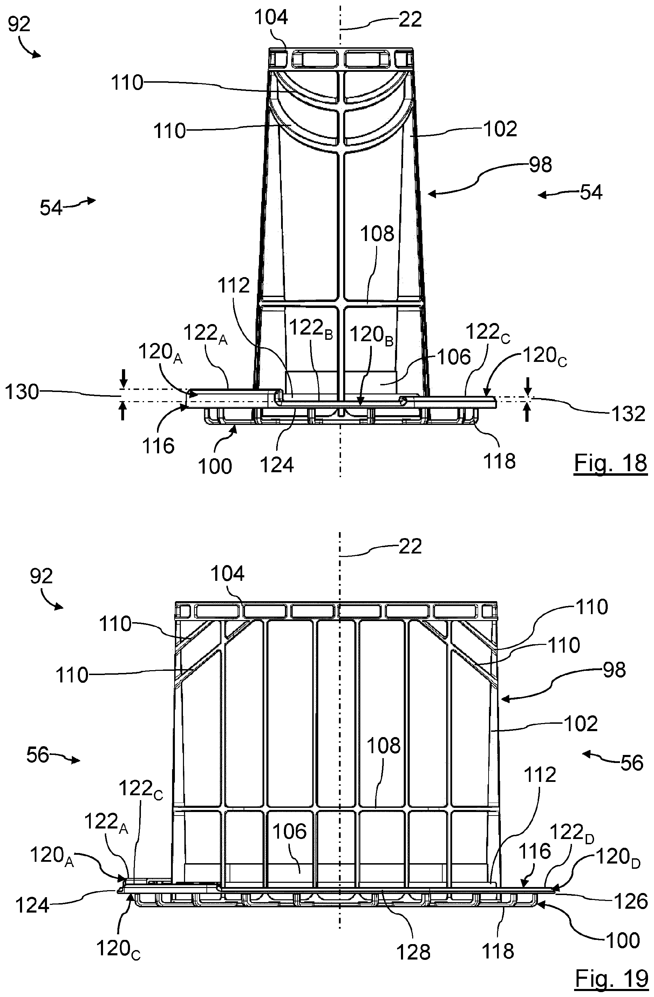

Die zentrale Abstützfläche 122_{B} und die zentrale Abstützfläche 122_{D} befinden sich in gleicher axialer Höhe. Die äußere Abstützfläche 122_{A} befindet sich auf der dem Verbindungsring 104 zugewandten Seite des Stützrings 116 in einem axialen Abstand 130, welcher beispielsweise in der Figur 18 bezeichnet ist, zu der zentralen Abstützfläche 122_{B}. Die andere äußere Abstützfläche 122c befindet sich auf der dem Verbindungsring 104 zugewandten Seite des Stützrings 116 in einem axialen Abstand 132 zu der zentralen Abstützfläche 122_{B}. Der Abstand 130 der äußeren Abstützfläche 122_{A} ist größer als der Abstand 132 der äußeren Abstützfläche 122c. Der Abstand 130 der äußeren Abstützfläche 122_{A} entspricht dem Abstand 66 der äußeren Anlagefläche 50_{A} des Gehäusetopfs 12. Der Abstand 132 der äußeren Abstützfläche 122c entspricht dem Abstand 64 der äußeren Anlagefläche 50c des Gehäusetopfs 12.

Insgesamt ist die dem Verbindungsring 104 axial zugewandte Seite des Stützrings 116 im Bereich der Abstützabschnitte 120 komplementär zu der dem Gehäuseboden 32 axial abgewandten Seite des Kragens 48 des Gehäusetopfs 12.

Der Filtermediumkörper 90 umfasst, wie beispielsweise in der Figur 3 gezeigt, einen äußeren Filterbalg 134 und einen inneren Filterbalg 136. Die Filterbälge 134 und 136 bestehen jeweils aus gefaltetem Filtermedium, beispielsweise Filtervlies.

Der äußere Filterbalg 134 hat die Form eines hohlen Kegelstumpfes mit lang-ovaler Grundfläche. Der äußere Filterbalg 134 ist koaxial zur Achse 22. Die Grundfläche des äußeren Filterbalges 134 befindet sich auf der Seite des Hauptfilterelements 16, auf der sich auch das Rahmenelement 100 des Skeletts 92 befindet. Die radial innere Mantelseite des äußeren Filterbalges 134 verläuft parallel zu dessen radial äußerer Mantelseite. Die Falten des gefalteten äußeren Filterbalges 134 erstrecken sich jeweils in axialer Richtung. Die Falten definieren die jeweilige Mantelseite.

Die radial äußere Mantelfläche des äußeren Filterbalges 134 bildet eine radial äußere Außenmantelfläche 242 des Filtermediumkörpers 90. Die radial äußere Außenmantelfläche 242 des Filtermediumkörpers 90 weist bezüglich ihres um die Achse 22 umlaufenden Verlaufs zwei gebogene Abschnitte 244 und zwei gerade Verbindungsabschnitte 246 auf. Die gebogenen Abschnitte 244 befinden sich auf radial gegenüberliegenden Seiten an den Kurzseiten 56. Die Verbindungsabschnitte 246 befinden sich auf radial gegenüberliegenden Seiten an den Langseiten 54. Die gebogenen Abschnitte 244 sind durch die geraden Verbindungsabschnitte 246 verbunden.

Die radiale Dicke des äußeren Filterbalges 134 wird durch die Faltenhöhe definiert. Die radiale Dicke des äußeren Filterbalges 134 entspricht etwa dem radialen Abstand des Stützrings 116 des Rahmenelements 100 des Skeletts 92 zu dem radial äußeren Ring 112 und zu den radial äußeren Seiten der Axialstreben 102.

Der radial äußere Umfang und der radial innere Umfang des äußeren Filterbalges 134 verkleinern sich jeweils in axialer Richtung von dem Rahmenelement 100 des Skeletts 92 zu dem Verbindungsring 104. Der äußere Filterbalg 134 verjüngt sich in axialer Richtung betrachtet von dem Rahmenelement 100 zu dem Verbindungsring 104 hin.

Die radial innere Mantelseite des äußeren Filterbalges 134 stützt sich an den jeweiligen radial äußeren Seiten der Axialstreben 102, des Zwischenrings 108 und der Verbindungsbögen 110 des Skeletts 92 ab.

Der innere Filterbalg 136 hat die Form eines hohlen Kegelstumpfes mit lang-ovaler Grundfläche. Der innere Filterbalg 136 ist koaxial zur Achse 22. Die Grundfläche des inneren Filterbalges 136 befindet sich auf der Seite des Hauptfilterelements 16, auf der sich auch der Verbindungsring 104 des Skeletts 92 befindet. Die radial innere Mantelseite des inneren Filterbalges 136 verläuft parallel zu dessen radial äußerer Mantelseite. Die Falten des gefalteten inneren Filterbalges 136 erstrecken sich jeweils in axialer Richtung. Die Falten definieren die jeweilige Mantelseite.

Die radiale Dicke des inneren Filterbalges 136 wird durch die Faltenhöhe definiert. Die radiale Dicke des inneren Filterbalges 136 entspricht etwa der radialen Dicke des äußeren Filterbalges 134.

Der radial äußere Umfang und der radial innere Umfang des inneren Filterbalges 136 verkleinern sich jeweils in axialer Richtung von dem Verbindungsring 104 des Skeletts 92 zu dem Rahmenelement 100. Der innere Filterbalg 136 verjüngt sich in axialer Richtung betrachtet von dem Verbindungsring 104 zu dem Rahmenelement 100 hin.

Die radial äußere Mantelseite des inneren Filterbalges 136 stützt sich an den jeweiligen radial inneren Seiten der Axialstreben 102, des Zwischenrings 108, des radial inneren Rings 106 und der Verbindungsbögen 110 des Skeletts 92 ab.

Der Umfang der radial äußeren Mantelseite des inneren Filterbalges 136 im Bereich der Grundfläche ist etwas kleiner als der Umfang der radial inneren Mantelseite des äußeren Filterbalges 134 im Bereich der Deckseite. Der innere Filterbalg 136 ist koaxial in einem von dem äußeren Filterbalg 134 umschlossenen Innenraum angeordnet.

Auf der Seite des Verbindungsrings 104 des Skeletts 92 ist die Grundseite des äußeren Filterbalges 134 über eine sich umfangsmäßig und radial erstreckende Verbindungsfalte 138 mit der Grundseite des inneren Filterbalges 136 verbunden.

Zwischen der radial äußeren Umfangsseite des inneren Filterbalges 136 und der radial inneren Umfangsseite des äußeren Filterbalges 134 werden die Strömungsräume 140 realisiert. Umfangsmäßig wird jeder der Strömungsräume durch eine von zwei benachbarten Axialstreben 102 begrenzt. In die Strömungsräume 140 kann zu reinigendes Gas einströmen. Von den Strömungsräumen 140 kann das zu reinigende Gas funktional parallel den äußeren Filterbalg 134 von radial innen nach radial außen und den inneren Filterbalg 136 von radial außen nach radial innen durchströmen.

Der Endkörper 94 verschließt einen von dem inneren Filterbalg 136 umgebenen Elementinnenraum 42 auf der axialen dem Rahmenelement 100 zugewandten Stirnseite. Der Endkörper 94 ist koaxial zur Achse 22 angeordnet. Der Endkörper 94 hat einen lang-ovalen Querschnitt. Der Endkörper 94 ist bezüglich der Achse 22 umlaufend mit dem radial inneren Ring 106 des Skeletts 92 verbunden und wird durch diesen gestützt. Der Endkörper 94 ist beispielsweise aus elastischem Material, beispielsweise Elastomer.

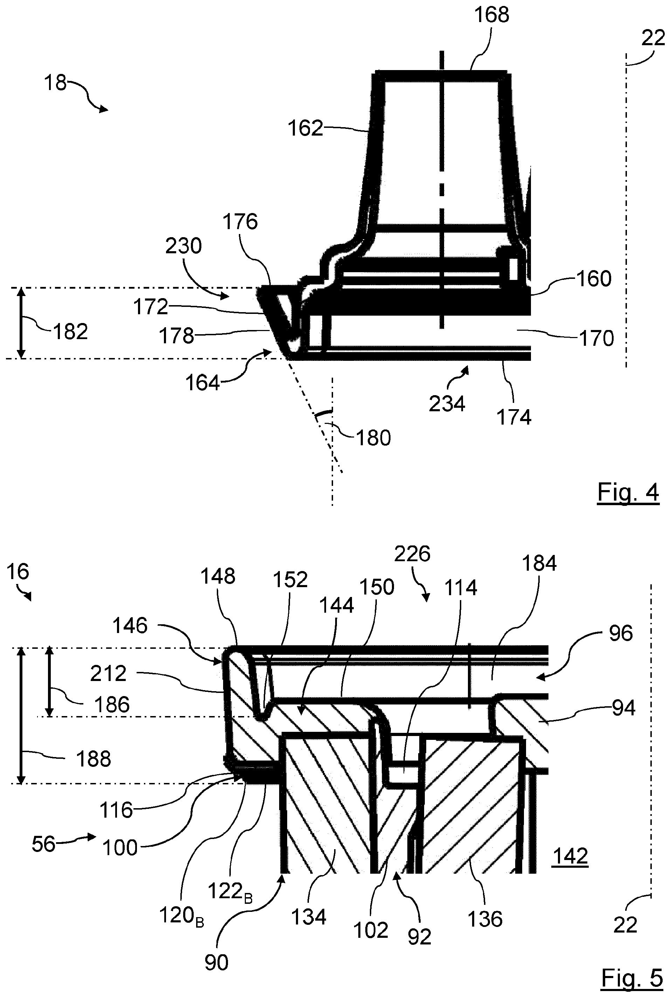

Im Folgenden wird die Dichtung 96, welche in der Figur 5 im Detail gezeigt ist, näher erläutert. Die Dichtung 96 ist ringförmig und hat einen in axialer Richtung betrachtet lang-ovalen Verlauf. Die Dichtung 96 ist einteilig aus einem elastischen Material, beispielsweise Elastomer, gefertigt. Das Material der Dichtung 96 ist weicher als das Material, aus dem das Skelett 92 mit dem Rahmenelement 100 gebildet ist.

Die Dichtung 96 umfasst einen Halteabschnitt 144 und einen Dichtabschnitt 146.

Mit dem Halteabschnitt 144 ist die Dichtung 96 mit dem Rahmenelement 100 des Skeletts 92 verbunden. Dabei kann die Dichtung 96 mit dem Halteabschnitt 144 an die dem Verbindungsring 104 axial abgewandte Seite des Rahmenelements 100 geklebt oder angegossen sein. Der Halteabschnitt 144 umgibt den radial äußeren Ring 112 des Skeletts 92 und die Stufen an den Enden der Axialstreben 102 auf deren radial äußeren Seiten auf der jeweils radial inneren Seite. Das Rahmenelement 100 ist dort abschnittsweise vom Material der Dichtung 96 umschlossen.

Der Halteabschnitt 144 lässt die Abstützflächen 122 auf der dem Verbindungsring 104 axial zugewandte Seite des Stützrings 116 frei.

Der Halteabschnitt 144 erstreckt sich über den radial äußeren Ring 112 des Skeletts 92 hinweg nach radial außen und geht im Bereich der radial äußeren Seite des Stützrings 116 in den Dichtabschnitt 146 über.

Der Dichtabschnitt 146 ist unmittelbar benachbart zu der bezüglich der Achse 22 radial äußeren Mantelfläche des Stützrings 116 und damit des Rahmenelements 100 angeordnet. Außerdem ist der Dichtabschnitt 146 vollständig radial außerhalb der bezüglich der Achse 22 radial äußeren Mantelfläche des Filtermediumkörpers 90 angeordnet.

Eine freie Seite 150 des Halteabschnitts 144 auf der dem Rahmenelement des Skeletts 92 abgewandten Seite des Halteabschnitts 144 verläuft in einer Ebene senkrecht zur Achse 22.

Der Dichtabschnitt 146 ist ein Dichtsteg. Der Dichtabschnitt 146 erstreckt sich von dem Stützring 116 in axialer Richtung weg. Das freie Ende des Dichtabschnitts 146 verläuft in einer gedachten Ebene senkrecht zur Achse 22. Das axial freie Ende 148 des Dichtabschnitts 146 überragt die dem Skelett 92 abgewandte Seite 150 des Halteabschnitts 144 in axialer Richtung. Der radial äußere Umfang des Dichtabschnitts 146 im Bereich seines freien Endes 148 ist etwas größer als der radial äußere Umfang des Dichtabschnitts 146 im Bereich des Stützrings 116. Entsprechend ist der radial innere Umfang des Dichtabschnitts 146 im Bereich des freien Endes 148 größer als der radial innere Umfang des Dichtabschnitts 146 im Bereich des Übergangs zum Halteabschnitt 144. Der Dichtabschnitt 146 verjüngt sich konisch in axialer Richtung von dem freien Ende 148 zum Stützring 116 hin.

Der Dichtabschnitt 146 ist gegenüber der radial äußeren Außenmantelfläche 242 des Filtermediums 90 nach radial außen versetzt.

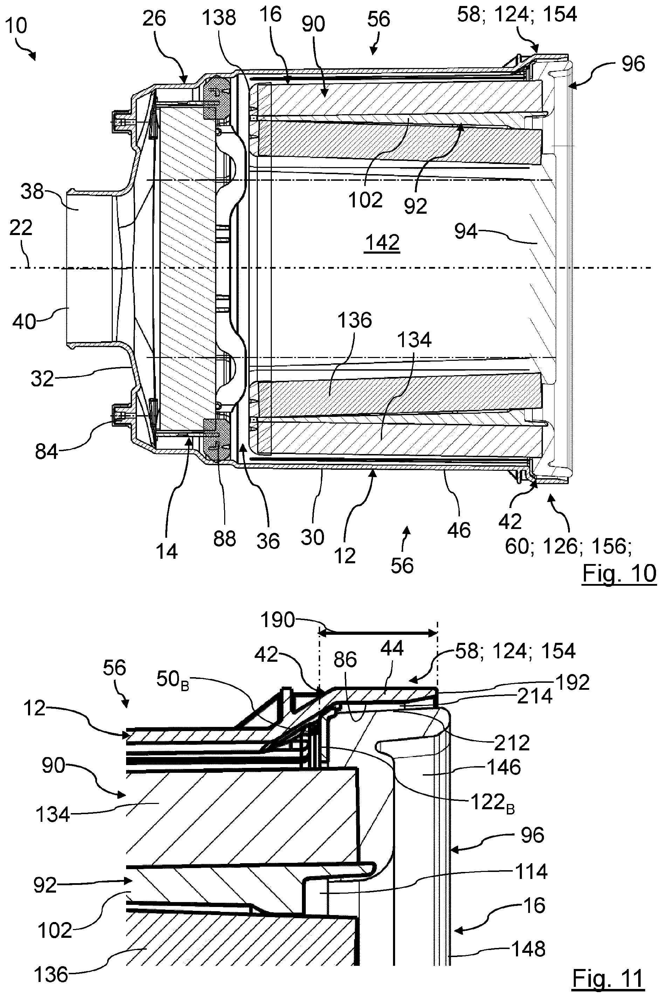

Ein axialer Abstand 188 zwischen der jeweiligen Abschnittsfläche 122 des Rahmenelements 100 des Skeletts 92 und dem freien Ende 148 der Dichtung 96 ist bei entspannter Dichtung 96, wie beispielsweise in der Figur 11 gezeigt, größer als ein axialer Abstand 190 zwischen der entsprechenden Anlagefläche 50 des Kragens 48 des Gehäusetopfs 12 und einem freien Rand 192 der Bundwand 44.

Am Übergang des Halteabschnitts 144 zum Dichtabschnitt 146 befindet sich eine Vertiefung 152. Die Vertiefung 152 erstreckt sich bezüglich der Achse 22 umlaufend entlang der radial inneren Seite des Dichtabschnitts 146 auf der dem Stützring 116 axial abgewandten Seite 150 des Halteabschnitts 144.

In axialer Richtung betrachtet hat der Dichtabschnitt 146 einen lang-ovalen Verlauf. Der Verlauf des Dichtabschnitts 146 entspricht dem Verlauf der Bundwand 44 des Gehäusetopfs 12 und des Rahmenelements 100 des Skeletts 92 in axialer Richtung betrachtet.

Der Dichtabschnitt 146 weist auf der Kurzseite 56 einen flach gebogenen Abschnitt 154 und auf der gegenüberliegenden Kurzseite 56 einen kreisförmig gebogenen Abschnitt 156 auf. Der flach gebogene Abschnitt 154 hat einen größeren Krümmungsradius als der kreisförmig gebogene Abschnitt 156. Der flach gebogene Abschnitt 154 und der kreisförmig gebogene Abschnitt 156 sind an den Langseiten 54 jeweils mit einem geraden Verbindungsabschnitt 158 verbunden.

Die Tauchrohrplatte 18 wird im Folgenden anhand der Figuren 3 und 4 näher erläutert.

Die Tauchrohrplatte 18 ist einstückig realisiert. Die Tauchrohrplatte 18 besteht aus einem Kunststoff, beispielsweise einem spritzgießfähigen Hartkunststoff. Beispielsweise ist die Tauchrohrplatte 18 nach einem Spritzgussverfahren hergestellt.

Die Tauchrohrplatte 18 umfasst einen Plattenabschnitt 160, eine Mehrzahl von Tauchrohren 162 und eine Rippe 164.

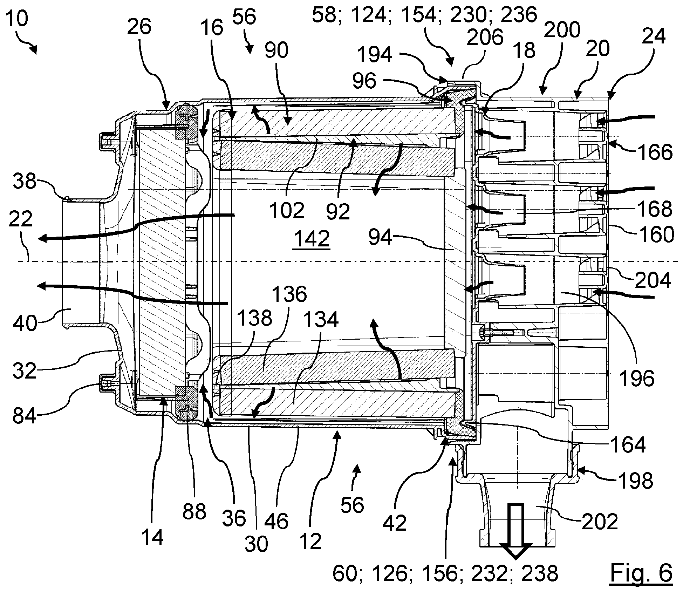

Der Plattenabschnitt 160 erstreckt sich in einer Ebene senkrecht zur Achse 22. **In** dem Plattenabschnitt 160 sind verteilt mehrere Tauchrohre 162 angeordnet. Jedes der Tauchrohre 162 ist Teil eines Zyklonabscheiders 166. **In** der Figur 6 sind beispielsweise einige der Zyklonabscheider 166 gezeigt. Die Zyklonabscheider 166 sind beispielhaft als Axialzyklone ausgestaltet. Die Tauchrohrplatte 18 mit den Tauchrohren 162 bildet gemeinsam mit dem Zyklongehäuse 20 den Zyklonblock 24. Der Zyklonblock 24 weist eine Mehrzahl von Zyklonabscheidern 166 auf.

Jedes der Tauchrohre 162 hat etwa die Form eines hohlen Kreiszylinderstumpfs, dessen Achsen parallel zur Achse 22 verlaufen. Die Grundflächen der Kreiszylinderstümpfe der Tauchrohre 162 befinden sich auf der Seite des Plattenabschnitts 160. Die Tauchrohre 162 verjüngen sich, in axialer Richtung betrachtet, von dem Plattenabschnitt 160 weg. Die Innenräume der Tauchrohre 162 dienen als Einlassöffnungen 168 für zu reinigendes Gas.

An seinem radial äußeren Rand geht der Plattenabschnitt 160 in die Rippe 164 über. **In** Figur 4 ist die Rippe 164 im Detail gezeigt. Die Rippe 164 erstreckt sich umfangsmäßig zusammenhängend koaxial zur Achse 22. Die Rippe 164 hat insgesamt ein etwa V-förmiges Profil.

Einer der Schenkel der V-förmigen Rippe 164, welcher im Folgenden als Axialschenkel 170 bezeichnet wird, ist mit dem Rand des Plattenabschnitts 160 verbunden. Der Axialschenkel 170 befindet an der radial inneren Seite der Rippe 164. Der Axialschenkel 170 erstreckt sich zumindest in entspanntem Zustand, beispielsweise bei nicht montierter Tauchrohrplatte 18, axial etwa parallel zur Achse 22 und umfangsmäßig.

Der andere Schenkel des "V", welcher im Folgenden als Rampenschenkel 172 bezeichnet wird, ist auf der dem Plattenabschnitt 160 axial abgewandten Seite des Axialschenkels 170 mit diesem verbunden. Der Verbindungsrand des Axialschenkels 170 mit dem Rampenschenkel 172, also die geschlossene Seite des "V", wird im Folgenden als Rippenrand 174 bezeichnet. Der Rampenschenkel 172 befindet sich an der radial äußeren Seite der Rippe 164. Der Rampenschenkel 172 erstreckt sich von dem Rippenrand 174 auf der dem Plattenabschnitt 160 axial zugewandten Seite schräg zur Achse 22 nach radial außen. Das freie Ende des Rampenschenkels 172 wird als freier Rand 176 bezeichnet.

Die radial äußere Seite des Rampenschenkels 172 bildet eine Kontaktfläche 178. Die Kontaktfläche 178 liegt bei montierter Filtervorrichtung 10, wie weiter unten erläutert wird, an dem Dichtabschnitt 146 der Dichtung 96 des Hauptfilterelements 16 an. Die Kontaktfläche 178 verläuft schräg zur Achse 22 und umfangsmäßig. Die Kontaktfläche 178 schließt einen spitzen Winkel 180 mit der Achse 22 ein. Der Winkel 180 kann beispielsweise etwa zwischen 30° und 45° betragen.

Ein axialer Abstand 182 zwischen dem freien Rand 176 und dem Rippenrand 174 ist etwa gleich groß wie ein axialer Abstand zwischen dem Rippenrand 174 und dem Plattenabschnitt 160.

In axialer Richtung betrachtet hat die Rippe 164 einen lang-ovalen Verlauf. Der Verlauf der Rippe 164 entspricht dem Verlauf der Bundwand 44 des Gehäusetopfs 12, des Rahmenelements 100 des Skeletts 92 und des Dichtabschnitts 146 der Dichtung 96 in axialer Richtung betrachtet.

Die Rippe 164 weist auf der Kurzseite 56 einen flach gebogenen Abschnitt 230 und auf der gegenüberliegenden Kurzseite 56 einen kreisförmig gebogenen Abschnitt 232 auf. Der flach gebogene Abschnitt 230 hat einen größeren Krümmungsradius ist als der kreisförmig gebogene Abschnitt 232. Der flach gebogene Abschnitt 230 und der kreisförmig gebogene Abschnitt 232 sind an den Langseiten 54 jeweils mit einem geraden Verbindungsabschnitt 234 verbunden.

Der Umfang des Rippenrandes 174 entspricht dem Umfang der Vertiefung 152 der Dichtung 96. Der spitze Winkel 180 der Kontaktfläche 178 ist größer als ein Winkel zwischen einer radial inneren Dichtungsfläche 184 des Dichtabschnitts 146 der Dichtung 96 und der Achse 22 bei entspannter Dichtung 96, beispielsweise in nicht montiertem Zustand. Der axiale Abstand 182 zwischen dem Rippenrand 174 und dem freien Rand 176 der Rippe 164 entspricht etwa einem axialen Abstand 186 bei der Dichtung 96 zwischen dem Grund der Vertiefung 152 und dem freien Ende 148 des Dichtabschnitts 146.

Das Zyklongehäuse 20 wird im Folgenden anhand der Figuren 3, 6 und 7 näher erläutert.

Das Zyklongehäuse 20 umfasst einen Befestigungsrahmen 194, eine Mehrzahl von Abscheidekammern 196 und eine Partikelaustragvorrichtung 198 und insgesamt vier Spannklammern 78.

Die Abscheidekammern 196 befinden sich in einem Hauptteil 200 des Zyklongehäuses 20. Jede der Abscheidekammern 196 ist einem der Tauchrohre 162 der Tauchrohrplatte 18 zugeordnet. Die Tauchrohre 162 mit der entsprechenden Abscheidekammer 196 bilden jeweils einen der Zyklonabscheider 166. Die Abscheidekammern 196 haben jeweils eine etwa kreiszylindrische Form. Die Achsen der Abscheidekammern 196 verlaufen parallel zur Achse 22. Die Achsen der Abscheidekammern 196 verlaufen bei montierter Filtervorrichtung 10 koaxial zu Achsen der entsprechenden Tauchrohre 162.

Die Partikelaustragvorrichtung 198 ist an einer radial äußeren Seite des Hauptteils 200 angeordnet. Die Abscheidekammern 196 sind in hier nicht weiter interessierende Weise fluidtechnisch mit der Partikelaustragvorrichtung 198 verbunden. Auf diese Weise können in dem jeweiligen Zyklonabscheider 166 von dem zu reinigenden gasförmigen Medium abgeschiedene Partikel, beispielsweise Staubpartikel, in die Partikelaustragvorrichtung 198 gelangen.

Die Partikelaustragvorrichtung 198 hat eine Austragöffnung 202. Die Austragöffnung 202 ist während des regulären Betriebs der Filtervorrichtung 10 verschlossen. Die Austragöffnung 202 kann zum Ablassen von in der Partikelaustragvorrichtung 198 gesammelten Partikeln geöffnet werden. In der beispielsweise in der Figur 1 gezeigten betriebsbereiten Montageorientierung der Filtervorrichtung 10 befindet sich die Partikelaustragvorrichtung 198 räumlich unten am Zyklongehäuse 20. Die Austragöffnung 202 ist dann nach räumlich unten gerichtet.

Der Befestigungsrahmen 194 befindet sich an einer axialen Stirnseite des Hauptteils 200. Auf der dem Befestigungsrahmen 194 axial gegenüberliegenden Seite des Hauptteils 200 weist jede der Abscheidekammern 196 eine Einlassöffnung 204 für zu reinigendes Gas auf. Auf der dem Befestigungsrahmen 194 axial zugewandten Seite weist jede der Abscheidekammern 196 eine Öffnung für das entsprechende Tauchrohr 162 auf.

Der Befestigungsrahmen 194 weist eine Rahmenaußenwand 206 auf, welche über einen Kragen 208 mit dem Hauptteil 200 verbunden ist.

Die Rahmenaußenwand 206 und der Kragen 208 erstrecken sich umfangsmäßig zusammenhängend um die Achse 22.

Der Kragen 208 erstreckt sich in radialer Richtung vom Hauptteil 200 nach radial außen. Die Rahmenaußenwand 206 erstreckt sich in axialer Richtung vom Kragen 208 von dem Hauptteil 200 weg.

Im Bereich ihres dem Hauptteil 200 axial abgewandten freien Randes weist die Rahmenaußenwand 206 an der radial inneren Umfangsseite eine Führungsschräge 210 auf. Im Bereich der Führungsschräge 210 vergrößert sich der radial innere Umfang der Rahmenaußenwand 206 in axialer Richtung von dem Hauptteil 200 weg zum freien Rand hin. Der bezüglich der Achse 22 umlaufende Verlauf der Rahmenaußenwand 206 entspricht dem umlaufenden Verlauf des Bundes 42 des Gehäusetopfs 12.

In axialer Richtung betrachtet hat die Rahmenaußenwand 206 einen lang-ovalen Verlauf. Der Verlauf der Rahmenaußenwand 206 entspricht dem Verlauf der Bundwand 44 des Gehäusetopfs 12, des Rahmenelements 100 des Skeletts 92, des Dichtabschnitts 146 der Dichtung 96 und der Rippe 164 der Tauchrohrplatte 18 in axialer Richtung betrachtet.

Die Rahmenaußenwand 206 weist auf der Kurzseite 56 einen flach gebogenen Abschnitt 236 und auf der gegenüberliegenden Kurzseite 56 einen kreisförmig gebogenen Abschnitt 238 auf. Der flach gebogene Abschnitt 236 hat einen größeren Krümmungsradius ist als der kreisförmig gebogene Abschnitt 238. Der flach gebogene Abschnitt 236 und der kreisförmig gebogene Abschnitt 238 sind an den Langseiten 54 jeweils mit einem geraden Verbindungsabschnitt 240 verbunden.

Der radial innere Umfang der Rahmenaußenwand 206 im Bereich axial zwischen der Führungsschräge 210 und dem Hauptteil 200 ist etwas größer als der radial äußere Umfang des Bundes 42 des Gehäusetopfs 12.

Die radial äußere Seite des Hauptteils 200 hat in axialer Richtung betrachtet einen lang-ovalen Verlauf. Dabei weisen die gebogenen Abschnitte an den Kurzseiten 56 den gleichen Krümmungsradius auf. Insofern unterscheidet sich der lang-ovale Verlauf des Hauptteils 200 von dem lang-ovalen Verlauf der Rahmenaußenwand 206. Der radial äußere Umfang des Hauptteils 200 entspricht in etwa dem radial äußeren Umfang des Hautwandabschnitts 46 des Gehäusetopfs 12.

Zwei der Spannklammern 78 befinden sich auf der Seite des flachgebogenen Abschnitts 236 jeweils im Bereich des Übergangs zu dem entsprechenden geraden Verbindungsabschnitt 240. Die beiden anderen Spannklammern 78 befinden sich auf der Seite des kreisförmig gebogenen Abschnitts 238 jeweils im Bereich des Übergangs zu dem entsprechenden geraden Verbindungsabschnitt 240.

Die Spannklammern 78 greifen jeweils im Bereich der der Rahmenaußenwand 206 axial abgewandten Außenseite des Kragens 208 an. Die Spannklammern 78 erstrecken sich über den freien Rand der Rahmenaußenwand 206 hinweg. Bei den Spannklammern 78 handelt es sich beispielhaft um Federbügel.

Ein Verfahren zum Zusammenbau der Filtervorrichtung 10 wird im Folgenden beschrieben.

Zunächst wird die Tauchrohrplatte 18 mit dem Zyklongehäuse 20 verbunden. Hierzu wird die Tauchrohrplatte 18 mit den Tauchrohren 162 voran in axialer Richtung in den Befestigungsrahmen 194 gebracht. Dabei kann es erforderlich sein, die Tauchrohrplatte 18 und das Zyklongehäuse 20 relativ zueinander um die Achse 22 so zu drehen, dass der flach gebogene Abschnitt 236 der Rahmenaußenwand 206 mit dem flach gebogenen Abschnitt 230 der Rippe 164 einerseits und der kreisgebogene Abschnitt 238 des Befestigungsrahmens 194 und der kreisförmig gebogene Abschnitt 232 der Rippe 164 übereinstimmen. Beim Zusammenbau werden die Tauchrohre 162 jeweils in einer der Abscheidekammern 196 angeordnet. Anschließend wird die Tauchrohrplatte 18 mit Schrauben 28 an dem Zyklongehäuse 20 fixiert. Bei einem späteren Austausch des Hauptfilterelements 16 und/oder des Nachfilterelements 14 aus der Filtervorrichtung 10 kann die Tauchrohrplatte 18 an dem Zyklongehäuse 20 verbleiben. So kann der gesamte Zyklonblock 24 von dem Gehäusetopf 12 getrennt werden.

Das Nachfilterelement 14 wird mit seiner der Dichtung 88 axial abgewandten Seite voran in axialer Richtung durch die Serviceöffnung 34 in den Gehäusetopf 12 gebracht. Dabei kann es erforderlich sein, den Gehäusetopf 12 und das Nachfilterelement 14 relativ zueinander um die Achse 22 so zu drehen, dass die Langseiten 54 des Nachfilterelements 14 mit den Langseiten 54 des Gehäusetopfs 12 und die Kurzseiten 56 des Nachfilterelements 14 mit den Kurzseiten 56 des Gehäusetopfs 12 übereinstimmen. Das Nachfilterelement 14 wird in dem abgestuften Abschnitt der Gehäusewand 30 axial neben dem Gehäuseboden 32 platziert.

Anschließend wird das Hauptfilterelement 16 mit seiner der Dichtung 96 axial abgewandten Seite voran in axialer Richtung durch die Serviceöffnung 34 in den Filterelementinnenraum 36 des Gehäusetopfs 12 gebracht. Hierzu kann es erforderlich sein, den Gehäusetopf 12 und das Hauptfilterelement 16 bezüglich der Achse 22 relativ zueinander so zu drehen, dass die Kurzseite 56 des Hauptfilterelements 16 mit dem flach gebogenen Abschnitt 124 des Rahmenelements 100 des Skeletts 92 und dem flachgebogenen Abschnitt 154 der Dichtung 88 mit der Kurzseite 56 des Gehäusetopfs 12 mit dem flach gebogenen Abschnitt 58 der Bundwand 44 übereinstimmt.

Das Hauptfilterelement 16 wird in axialer Richtung so weit in dem Gehäusetopf 12 geschoben, bis die Abstützflächen 122 des Skeletts 92 axial an den entsprechenden Anlageflächen 50 des Bundes 42 anliegen. Diese Montagephase ist in den Figuren 10 und 11 dargestellt. In dieser Montagephase ist die radial äußere Mantelfläche 212 des Dichtabschnitts 146 in radialer Richtung zu der Innenmantelfläche 86 der Bundwand 44 des Bundes 42 des Gehäusetopfs 12 beabstandet. Zwischen der radial äußeren Mantelfläche 212 der Dichtung 96 und der Innenmantelfläche 86 des Bundes 42 verbleibt ein Radialspalt 214. Der Radialspalt 214 erstreckt sich bezüglich der Achse 22 umlaufend und in axialer Richtung über die gesamte axiale Ausdehnung der Innenmantelfläche 86. In dem in den Figuren 10 und 11 gezeigten Montagezustand überragt das freie Ende 148 des Dichtabschnitts 146 in axialer Richtung den freien Rand 192 der Bundwand 44 des Gehäusetopfes 12.

Anschließend wird der Zyklonblock 24 mit der Tauchrohrplatte 18 voran in axialer Richtung auf den Bund 42 des Gehäusetopfs 12 gesteckt. Dabei kann es erforderlich sein, den Gehäusetopf 12 und den Zyklonblock 24 um die Achse 22 so zu drehen, dass jeweils die Kurzseite 56 der Bundwand 44 mit dem flachgebogenen Abschnitt 58 mit der Kurzseite 56 der Rahmenaußenwand 206 des Zyklongehäuses 20 mit dem flachgebogenen Abschnitt 236 übereinstimmt und entsprechend die Kurzseite 56 der Bundwand 44 mit dem kreisförmig gebogenen Abschnitt 60 mit der Kurzseite 56 der Rahmenaußenwand 206 mit dem kreisförmig gebogenen Abschnitt 238 übereinstimmt.

Beim axialen Aufstecken wird zunächst der freie Rand 192 der Bundwand 44 an der radikal inneren Seite der Führungsschräge 210 der Rahmenaußenwand 206 des Zyklongehäuses 20 entlanggeführt und so innerhalb des Befestigungsrahmens 194 zentriert. Bei einem weiteren Einschieben gleitet die radial äußere Seite des Rampenschenkels 172 der Rippe 164 der Tauchrohrplatte 18 an der radial inneren Dichtungsfläche 184 der Dichtung 96 entlang. Dadurch, dass der Rampenschenkel 172 einen größeren Neigungswinkel gegenüber der Achse 22 hat als die radial innere Dichtungsfläche 184 der Dichtung 96, drückt die Rippe 164 den Dichtabschnitt 146 nach radial außen gegen die Innenmantelfläche 86.

Bei weiterem Einschieben taucht der Rippenrand 174 der Rippe 164 in die Vertiefung 152 der Dichtung 96 ein. Außerdem presst der Kragen 208 des Zyklongehäuses 20 in axialer Richtung gegen das freie Ende 148 des Dichtabschnitts 146. Dadurch wird der Dichtabschnitt 146 in axialer Richtung verpresst und verformt. Das Material des Dichtabschnitts 146 weicht der axialen Verpressung in radialer Richtung aus. So entsteht eine zusätzliche Erhöhung einer radial wirkenden Anpresskraft, mit der der Dichtabschnitt 146 gegen die Innenmantelfläche 86 der Bundwand 44 gepresst wird.

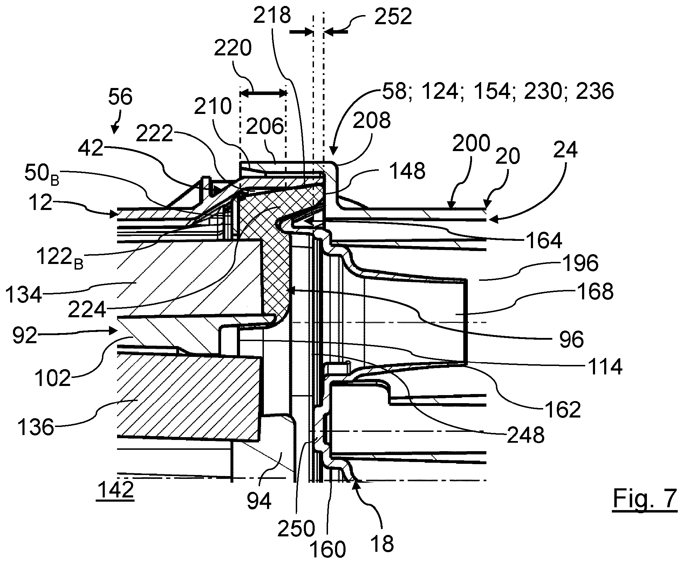

Die freien Enden der Spannklammern 78 werden, wie in der Figur 1 gezeigt, hinter den jeweiligen Angriffabschnitten 76 eingehakt. Anschließend werden die Spannklammern 78 gespannt. Dadurch wird der Zyklonblock 24 fest in axialer Richtung gegen den Bund 42 gedrückt. Die axiale Bewegung wird dadurch begrenzt, dass der freie Rand 192 der Bundwand 44 des Gehäusetopfs 12 sich in axialer Richtung gegen den Kragen 208 des Zyklongehäuses 20 abstützt, wie dies in den Figuren 6 und 7 gezeigt ist.

In der in den Figuren 1, 6 und 7 gezeigten, fertigen Montageposition liegt die radial äußere Mantelfläche 212 der Dichtung 96 in einem Kontaktabschnitt 218 an der Innenmantelfläche 86 des Bundes 42 des Gehäusetopfs 12 dicht an. Der Kontaktabschnitt 218 beginnt in einem axialen Abstand 220 zu dem Rahmenelement 100 des Skeletts 92, im Besonderen zu der jeweiligen Anlagefläche 50, und erstreckt sich in axialer Richtung bis zum freien Rand der Bundwand 44. Zwischen dem Rahmenelement 100 und dem Beginn des Kontaktabschnitts 218 verbleibt ein Restspalt 222 zwischen der radial äußeren Umfangsseite des Dichtabschnitts 146 und der Innenmantelfläche 86 der Bundwand 44. Der Restspalt 220 erstreckt sich umfangsmäßig zusammenhängend und in axialer Richtung. Der Restspalt 222 hat ein keilförmiges Profil, welches in axialer Richtung zu dem Kontaktabschnitt 218 hin abnimmt.

Jedes Tauchrohr 162 weist auf seiner der Anströmseite 226 des Filterelements 16 zugewandten Seite ein Ausströmende 248 auf. Das Ausströmende 248 ist von einem Tauchrohrrandabschnitt 250 umgeben. Die Tauchrohrrandabschnitte 250 benachbarter Tauchrohre 162 gehen ineinander über. Die Tauchrohrrandabschnitte 250 sind in dem Plattenabschnitt 160 der Tauchrohrplatte 18 gebildet.

Die Tauchrohrrandabschnitte 250 befinden sich bei montierter Filtervorrichtung 10, wie beispielsweise in der Figur 7 gezeigt, in einem axialen Abstand 252 zu dem freien Ende 148 der umlaufenden Dichtung 96 radial innerhalb des Dichtabschnitts 146.

Die Ausströmenden 248 der Tauchrohre 162 befinden sich axial betrachtet jenseits des anströmseitigen axialen freien Endes 148 der umlaufenden Dichtung 96. Die die Ausströmenden 248 umgebenden Tauchrohrrandabschnitte 250, und damit auch die Ausströmenden 248 der Tauchrohre 162, tauchen axial betrachtet hinter das freie Ende 148 der umlaufenden Dichtung 96 und damit hinter das anströmseitige Ende des Hauptfilterelements 16 ein.

Zwischen der Tauchrohrplatte 18 und dem Gehäusetopf 12 ist in montiertem Zustand eine Dichtungskammer 224 realisiert, in welcher der Dichtabschnitt 146 der Dichtung 96 und ein Teil des Halteabschnitts 144 angeordnet sind. Die Dichtungskammer 224 wird radial innen durch die Rippe 164 der Tauchrohrplatte 18, radial außen durch die Innenmantelfläche 86 der Bundwand 44 des Gehäusetopfs 12 und axial durch den mit der Tauchrohrplatte 18 verbundenen Kragen 208 des Zyklongehäuses 20 begrenzt.

Zur Montage beispielsweise an einer Maschine, welche das mit der Filtervorrichtung 10 gereinigte gasförmige Medium benötigt, wird die Filtervorrichtung 10 mit der Kurzseite 56, an welcher die Partikelaustragvorrichtung 198 des Zyklonblocks 24 angeordnet ist, nach räumlich unten montiert. Dabei wird die Achse 22 im Wesentlichen horizontal angeordnet.

Beim Betrieb der Filtervorrichtung 10 wird das zu reinigende gasförmigem Medium, beispielsweise Luft, durch die Einlassöffnung 204 der Zyklonabscheider 166 angesaugt. Die Strömung des gasförmigen Mediums innerhalb der Filtervorrichtung 10 ist in der Figur 6 durch gebogene Pfeile angedeutet.

In den Zyklonabscheidern 166 findet eine Grobabscheidung von Partikeln statt. Die abgeschiedenen Partikel sinken der Schwerkraft folgend nach unten zur Partikelaustragvorrichtung 198, wo sie gesammelt werden. Die Austragöffnung 202 der Partikelaustragvorrichtung 198 wird bei Bedarf oder bei einer Wartung geöffnet und die Partikelaustragvorrichtung 198 entleert.

Das vorgereinigte gasförmigem Medium gelangt durch die Einlassöffnungen 168 der Tauchrohre 162 zur Anströmseite 226 des Hauptfilterelements 16. Die Anströmseite 226 befindet sich auf der Seite des Hauptfilterelements 16, auf der sich auch die Dichtung 96 befindet.

Das zu reinigende gasförmige Medium strömt in die Strömungsräume 140 zwischen dem äußeren Filterbalg 134 und dem inneren Filterbalg 136. Dabei verteilt sich das gasförmige Medium umfangsmäßig, indem es durch die Verbindungsöffnungen 114 strömt. Von den Strömungsräumen 140 durchströmt zu reinigendes gasförmiges Medium den äußeren Filterbalg 134 von radial innen nach radial außen, wird mit diesem weiter gereinigt und gelangt in einen das Hauptfilterelement 16 radial außen umgebenden Ringraum. Funktional parallel durchströmt zu reinigendes gasförmiges Medium den inneren Filterbalg 136 von radial außen nach innen, wird mit diesem weiter gereinigt und gelangt in den Elementinnenraum 142.

Das in zweiter Stufe gereinigte gasförmige Medium aus dem Ringraum und das in zweiter Stufe gereinigte gasförmige Medium aus dem Elementinnenraum 142 gelangt zur Abströmseite 228 des Hauptfilterelements 16. Die Abströmseite 228 des Hauptfilterelements 16 befindet sich auf der der Anströmseite 226 axial abgewandten Seite.

Von der Abströmseite 228 aus durchströmt das in zweiter Stufe gereinigte gasförmige Medium das Nachfilterelement 14 und wird mit diesem weiter gereinigt.

Das insgesamt in drei Stufen gereinigte gasförmige Medium verlässt die Filtervorrichtung 10 durch die Auslassöffnung 40 des Filtergehäuses 26. Von dort wird das gereinigte gasförmigem Medium von entsprechenden Bauteilen der Maschine angesaugt.

## Patentansprüche

1. Filterelement (16) für gasförmige Medien, insbesondere Luftfilterelement (16), für eine Filtervorrichtung (10), umfassend
wenigstens einen Filtermediumkörper (90) mit einer Anströmseite (226) und einer Abströmseite (228), die jeweils an voneinander abgewandten bezüglich einer gedachten Achse (22) axialen Enden des Filtermediumkörpers (90) vorliegen,
und ein den wenigstens einen Filtermediumkörper (90) zumindest teilweise umlaufendes Rahmenelement (100), das bezüglich der Achse (22) radial über den Filtermediumkörper (90) auskragt und mit dem wenigstens einen Filtermediumkörper (90) verbunden ist,
wobei an einer der Anströmseite (226) zugewandten Seite des Rahmenelements (100) eine die Achse (22) umlaufende Dichtung (96) vorliegt,
und wobei an einer der Abströmseite (228) zugewandten Seite des Rahmenelements (100) wenigstens ein Abstützabschnitt (120_{A}, 120_{B}, 120c, 120_{D}) vorliegt, mittels dem das Filterelement (16) in einem Filtergehäuse (26) einer Filtervorrichtung (10) zumindest in bezüglich der Achse (22) axialer Richtung abstützbar ist,
**dadurch gekennzeichnet, dass**
das Rahmenelement (100) weniger flexibel als die umlaufende Dichtung (96) realisiert ist, insbesondere das Rahmenelement (100) aus härterem Material als die umlaufende Dichtung (96) gebildet ist, der wenigstens eine Abstützabschnitt (120_{A}, 120_{B}, 120c, 120_{D}) zumindest zwei über die bezüglich der Achse (22) umlaufende Erstreckung verteilt angeordnete Abstützflächen (122_{A}, 122_{B}, 122_{C}, 122_{D}) aufweist, die bezüglich der Achse (22) in axialer Richtung voneinander beabstandet sind, und die umlaufende Dichtung (96) einen in bezüglich der Achse (22) in axialer Richtung abstehenden umlaufenden Dichtsteg (146) aufweist, der dazu ausgebildet ist, zumindest anteilig bezüglich der Achse (22) radial gegenüber einer korrespondierenden Dichtfläche (86) des Filtergehäuses (26) abzudichten.

2. Filterelement nach Anspruch 1, **dadurch gekennzeichnet, dass** der Dichtsteg (146) in der bezüglich der Achse (22) axialen Richtung die Anströmseite (226) des wenigstens einen Filtermediumkörpers (90) überragt und/oder
**dass**
der Dichtsteg (146) unmittelbar benachbart zu einer bezüglich der Achse (22) radial äußeren Mantelfläche des Rahmenelements (100) angeordnet ist
und/oder
der Dichtsteg (146) vollständig radial außerhalb einer bezüglich der Achse (22) radial äußeren Mantelfläche des wenigstens einen Filtermediumkörpers (90) angeordnet ist.

3. Filterelement nach einem der Ansprüche 1 oder 2, **dadurch gekennzeichnet, dass**
die Dichtung (96) elastisches Material, insbesondere ein Elastomer, insbesondere ein geschäumtes Elastomer, aufweist oder daraus besteht
und/oder
das Rahmenelement (100) Kunststoff, insbesondere spritzgießbares Hartkunststoffmaterial, aufweist oder daraus besteht.

4. Filterelement nach einem der vorigen Ansprüche, **dadurch gekennzeichnet, dass**
die umlaufende Dichtung (96) an einer der Abströmseite (228) zugewandten Seite von dem Rahmenelement (100) begrenzt ist
und/oder
eine der Abströmseite (228) zugewandte Oberfläche des Rahmenelements (100) zumindest abschnittsweise frei liegt und den wenigstens einen Abstützabschnitt (120_{A}, 120_{B}, 120_{C}, 120_{D} ) bereitstellt.

5. Filterelement nach Anspruch 4, **dadurch gekennzeichnet, dass**
sich das Rahmenelement (100) ausgehend von dem Abstützabschnitt (120_{A}, 120_{B}, 120c, 120_{D}) nach radial innen und/oder in Richtung auf die Anströmseite (226) zu erstreckt
und/oder
das Rahmenelement (100) wenigstens abschnittsweise von Material der umlaufenden Dichtung (96) umschlossen ist.

6. Filterelement nach einem der vorigen Ansprüche, **dadurch gekennzeichnet, dass** das Rahmenelement (100) bezüglich seines Verlaufs wenigstens an seiner radial äußeren Mantelseite und/oder seiner radial inneren Mantelseite bezüglich der Achse (22) keine Rotationssymmetrie aufweist.

7. Filterelement nach einem der vorigen Ansprüche, **dadurch gekennzeichnet, dass**
das Rahmenelement (100) entlang seines um die Achse (22) laufenden Verlaufs wenigstens vier Abschnitte (124, 126, 128) aufweist, von denen die jeweils benachbarten Abschnitte (124, 128; 126, 128) unterschiedlich gebogene, auch gerade Verläufe aufweisen, und bei wenigstens einem Paar von jeweils zwei der Abschnitte (124, 126) auf gegenüberliegenden Seiten der Achse (22) die entsprechenden Abschnitte (124, 126) unterschiedlich gebogene Verläufe aufweisen
und/oder
der in Axialrichtung abstehende umlaufende Dichtsteg (146) entlang seines um die Achse (22) laufenden Verlaufs wenigstens vier Abschnitte (154, 156, 158) aufweist, von denen die jeweils benachbarten Abschnitte (154, 158; 156, 158) unterschiedlich gebogene, auch gerade Verläufe aufweisen, und bei wenigstens einem Paar von jeweils zwei der Abschnitte (154, 156) auf gegenüberliegenden Seiten der Achse (22) die entsprechenden Abschnitte (154, 156) unterschiedlich gebogene Verläufe aufweisen.

8. Filterelement nach einem der vorigen Ansprüche, **dadurch gekennzeichnet, dass**
das Rahmenelement (100) wenigstens zwei bezüglich ihres um die Achse (22) umlaufenden Verlaufs gebogene Abschnitte (124, 126) aufweist, die durch zwei Verbindungsabschnitte (128), insbesondere zwei bezüglich ihres um die Achse (22) umlaufenden Verlaufs gerade Verbindungsabschnitte (128), verbunden sind, wobei die Verbindungsabschnitte (128), insbesondere die geraden Verbindungsabschnitte (128), an bezüglich der Achse (22) gegenüberliegenden Langseiten (54) des Rahmenelements (100) vorliegen und die zwei gebogenen Abschnitte (124, 126) an bezüglich der Achse (22) gegenüberliegenden Kurzseiten (56) des Rahmenelements (100) vorliegen,
und/oder
der in Axialrichtung abstehende umlaufende Dichtsteg (146) wenigstens zwei bezüglich ihres um die Achse (22) umlaufenden Verlaufs gebogene Abschnitte (154, 156) aufweist, die durch zwei Verbindungsabschnitte (158), insbesondere zwei bezüglich ihres um die Achse (22) umlaufenden Verlaufs gerade Verbindungsabschnitte (158), verbunden sind, wobei die Verbindungsabschnitte (158), insbesondere die geraden Verbindungsabschnitte (158), an bezüglich der Achse (22) gegenüberliegenden Langseiten (54) des Dichtstegs (146) vorliegen und die zwei gebogenen Abschnitte (154, 156) an bezüglich der Achse (22) gegenüberliegenden Kurzseiten (56) des Dichtstegs (146) vorliegen.

9. Filterelement nach Anspruch 8, **dadurch gekennzeichnet, dass**
das Rahmenelement (100) einen ersten gebogenen Abschnitt (124) und einen zweiten gebogenen Abschnitt (126) aufweist, wobei der erste gebogene Abschnitt (124) zumindest abschnittsweise einen größeren Krümmungsradius aufweist als der zweite gebogene Abschnitt (126), wobei bevorzugt der erste gebogene Abschnitt (124) des Rahmenelements (100) einen abgeflachten Bereich aufweist, in dem der Krümmungsradius gegenüber dem Krümmungsradius des zweiten gebogenen Abschnitts (126) größer ist, und/oder
der in Axialrichtung abstehende umlaufende Dichtsteg (146) einen ersten gebogenen Abschnitt (154) und einen zweiten gebogenen Abschnitt (156) aufweist, wobei der erste gebogene Abschnitt (154) zumindest abschnittsweise einen größeren Krümmungsradius aufweist als der zweite gebogene Abschnitt (156), wobei bevorzugt der erste gebogene Abschnitt (154) des Dichtstegs (146) einen abgeflachten Bereich aufweist, in dem der Krümmungsradius gegenüber dem Krümmungsradius des zweiten gebogenen Abschnitts (156) größer ist.

10. Filterelement nach einem der vorigen Ansprüche, **dadurch gekennzeichnet, dass**
die bezüglich der Achse (22) radial äußere Mantelfläche (242) des Filtermediumkörpers (90) bezüglich ihres um die Achse (22) umlaufenden Verlaufs zumindest zwei gebogene Abschnitte (244) aufweist, die durch zwei Verbindungsabschnitte (246), insbesondere zwei gerade Verbindungsabschnitte (246), verbunden sind,
und/oder
sich ein Außenumfang des Filtermediumkörpers (90) in axialer Richtung von der Anströmseite (226) zur Abströmseite (228) betrachtet verringert, insbesondere sich der Filtermediumkörper (90) bezüglich seiner radial äußeren Seite in axialer Richtung von der Anströmseite (226) zur Abströmseite (228) betrachtet verjüngt, insbesondere konisch verjüngt.

11. Filterelement nach einem der vorigen Ansprüche, **dadurch gekennzeichnet, dass**
der wenigstens eine Filtermediumkörper (90) zumindest zwei Filterbälge (134, 136), insbesondere einen inneren Filterbalg (136) und einen äußeren Filterbalg (134), insbesondere zumindest zwei gefaltete Filterbälge, umfasst, welche wenigstens teilweise um die Achse (22) verlaufen und die parallel mit zu reinigendem gasförmigem Medium durchströmbar sind,
und/oder
ein innerer Filterbalg (136) des wenigstens einen Filtermediumkörpers (90) in einem von einem äußeren Filterbalg (134) des wenigstens einen Filtermediumkörpers (90) umschlossenen Innenraum angeordnet ist
und/oder
der wenigstens eine Filtermediumkörper (90) wenigstens einen Filterbalg (134, 136), insbesondere einen inneren Filterbalg (136) und/oder einen äußeren Filterbalg (134), aufweist, der eine Neigung gegenüber der Achse (22) aufweist.

12. Filterelement nach Anspruch 11, **dadurch gekennzeichnet, dass** bezüglich der Achse (22) radial zwischen den wenigstens zwei Filterbälgen (134, 136), insbesondere radial zwischen dem inneren Filterbalg (136) und dem äußeren Filterbalg (134), wenigstens ein fluiddurchlässiges Stützelement (98) vorliegt, an dem sich zumindest abschnittsweise wenigstens einer der wenigstens zwei Filterbälge (134, 136), insbesondere ein innerer Filterbalg (136) und/oder ein äußerer Filterbalg (134), abstützt,
und/oder
das Filterelement (16) wenigstens ein Stützelement (98) aufweist, an welchem wenigstens einer der Filterbälge (134, 136) abgestützt ist, wobei das wenigstens eine Stützelement (98) einteilig mit dem Rahmenelement (100) gebildet ist.

13. Filtervorrichtung (10) für gasförmige Medien, insbesondere für Luft,
umfassend ein Filtergehäuse (26) mit wenigstens einer Einlassöffnung (168) für zu reinigendes gasförmiges Medium und wenigstens einer Auslassöffnung (40) für gereinigtes gasförmiges Medium,
wobei in dem Filtergehäuse (26) bezüglich der Gasströmung zwischen der wenigstens einen Einlassöffnung (168) und der wenigstens einen Auslassöffnung wenigstens ein Filterelement (16), welches wenigstens einen Filtermediumkörper (90) aufweist, so angeordnet ist, dass dieses eine der Einlassöffnung (168) zugeordnete Rohseite von einer der Auslassöffnung (40) zugeordneten Reinseite trennt,
wobei das Filtergehäuse (26) ein erstes Gehäuseteil (12) umfasst, an dem die wenigstens eine Auslassöffnung (40) angeordnet ist und das wenigstens einen Filterelementaufnahmeraum (36) aufweist, in dem das wenigstens eine Filterelement (16) angeordnet ist,
und wobei das Filtergehäuse (26) ein zweites Gehäuseteil (18) umfasst, an dem die wenigstens eine Einlassöffnung (168) angeordnet ist und das wenigstens Teile (162) wenigstens eines Zyklonabscheiders (166) aufweist,
wobei das zweite Gehäuseteil (18) eine Serviceöffnung (34) des ersten Gehäuseteils (12) verschließt und das erste und das zweite Gehäuseteil (12, 18) lösbar miteinander verbunden und voneinander trennbar sind, um das wenigstens eine Filterelement (16) durch die Serviceöffnung (34) des ersten Gehäuseteils (12) entnehmen zu können,
**dadurch gekennzeichnet, dass**
wenigstens eines der Filterelemente (16) ein Filterelement nach einem der Ansprüche 1 bis 12 ist.

14. Verwendung eines Filterelements (16), umfassend zumindest einen Filtermediumkörper (90) in einer Filtervorrichtung (10) für gasförmige Medien, **dadurch gekennzeichnet, dass** das Filterelement (16) ein Filterelement nach einem der Ansprüche 1 bis 12 ist.

15. Verfahren zum Zusammenbau einer Filtervorrichtung (10) für gasförmige Medien, bei dem wenigstens ein Filterelement (16) durch eine Serviceöffnung (34) in einen Filterelementaufnahmeraum (36) eines ersten Gehäuseteils (12), welches wenigstens eine Auslassöffnung (40) für gereinigtes gasförmiges Medium aufweist, eines Filtergehäuses (26) der Filtervorrichtung (10) eingebracht wird und anschließend die Serviceöffnung (34) mit einem zweiten Gehäuseteil (18) des Filtergehäuses (26), welches wenigstens eine Einlassöffnung (168) für zu reinigendes gasförmiges Medium und wenigstens Teile (162) wenigstens eines Zyklonabscheiders (166) aufweist, verschlossen wird, **dadurch gekennzeichnet, dass** wenigstens ein Filterelement (16) nach einem der Ansprüche 1 bis 12 in den Filterelementaufnahmeraum (36) eingebracht wird.

## Claims

1. A filter element (16) for gaseous media, in particular air filter element (16), for a filter device (10), comprising
at least one filter medium body (90), with an inflow side (226) and an outflow side (228) which are present, in relation to a virtual axis (22), at axial ends of the filter medium body (90) facing away from each other, respectively,
and a frame element (100) at least partially extending circumferentially around the at least one filter medium body (90) which, in relation to the axis (22), radially projects past the filter medium body (90) and is connected to the at least one filter medium body (90),
wherein, at a side of the frame element (100) facing the inflow side (226), a seal (96) is provided which extends circumferentially around the axis (22),
and wherein, at a side of the frame element (100) facing the outflow side (228), at least one support section (120_{A}, 120_{B}, 120_{C}, 120_{D}) is present by means of which the filter element (16) can be supported at least in axial direction in relation to the axis (22) in a filter housing (26) of a filter device (10),
**characterized in that**
the frame element (100) is realized less flexible than the circumferential seal (96), in particular the frame element (100) is made of harder material than the circumferential seal (96), the at least one support section (120_{A}, 120_{B}, 120_{C}, 120_{D}) comprises at least two support surfaces (122_{A}, 122_{B}, 122_{C}, 122_{D}), distributed about the circumferential extension in relation to the axis (22), which are spaced apart from each other in axial direction in relation to the axis (22), and the circumferential seal (96) comprises a circumferential seal stay (146) which projects in relation to the axis (22) in axial direction and is configured to seal at least partially radially in relation to the axis (22) in relation to a corresponding seal surface (86) of the filter housing (26).

2. The filter element according to claim 1, **characterized in that** the seal stay (146) extends beyond the inflow side (226) of the at least one filter medium body (90) in the axial direction relative to the axis (22) and/or
**that**
the seal stay (146) is arranged immediately adjacent to a wall surface of the frame element (100) that is radially with respect to the axis (22)
and/or
the seal stay (146) is arranged completely radially outside a radially wall surface of the at least one filter medium body (90) relative to the axis (22).

3. The filter element according to one of the claims 1 or 2, **characterized in that**
the seal (96) comprises or consists of elastic material, in particular an elastomer, and more specifically a foamed elastomer
and/or
the frame element (100) comprises or is made of plastic, in particular an injection-moldable hard plastic material.

4. The filter element according to one of the preceding claims, **characterized in that**
the circumferential seal (96) is delimited at a side which is facing the outflow side (228) by the frame element (100)
and/or
a surface of the frame element (100) which is facing the outflow side (228) is exposed at least in sections and provides the at least one support section (120_{A}, 120_{B}, 120_{C}, 120_{D}).

5. The filter element according to claim 4, **characterized in that**
the frame element (100), beginning at the support section (120_{A}, 120_{B}, 120_{C}, 120_{D}), extends radially inwardly and/or in direction toward the inflow side (226)
and/or
the frame element (100) is embedded at least in sections by material of the circumferential seal (96).

6. The filter element according to one of the preceding claims, **characterized in that** the frame element (100), in relation to its course at least at its radially outer wall surface and/or at its radially inner wall surface, features no rotational symmetry in relation to the axis (22).

7. The filter element according to one of the preceding claims, **characterized in that**
the frame element (100), along its course extending around the axis (22), comprises at least four sections (124, 126, 128), of which the respective neighboring sections (124, 128; 126, 128) comprise differently curved, even straight courses, and, in case of at least one pair of respectively two of the sections (124, 126) on opposite sides of the axis (22), the corresponding sections (124, 126) have differently curved courses
and/or
the circumferential seal stay (146) projecting in axial direction along its course extending around the axis (22), comprises at least four sections (154, 156, 158) of which the respective neighboring sections (154, 158; 156, 158) comprise differently curved, even straight courses, and, in case of at least one pair of respectively two of the sections (154, 156) on opposite sides of the axis (22), the corresponding sections (154, 156) comprise differently curved courses.

8. The filter element according to one of the preceding claims, **characterized in that**
the frame element (100) comprises at least two curved sections (124, 126) curved in relation to their circumferential course around the axis (22), which are connected by two connection sections (128), in particular two straight connection sections (128) straight in relation to their circumferential course around the axis (22), wherein the connection sections (128), in particular the straight connection sections (128), are present at long sides (54) of the frame element (100), which are opposite each other in relation to the axis (22), and the two curved sections (124, 126) are present at short sides (56) of the frame element (100), which are opposite each other in relation to the axis (22),
and/or
the circumferential seal stay (146) projecting in axial direction comprises at least two curved sections (154, 156) curved in relation to their circumferential course around the axis (22), which are connected by two connection sections (158), in particular two straight connection sections (158) straight in relation to their circumferential course around the axis (22), wherein the connection sections (158), in particular the straight connection sections (158), are present at long sides (54) of the seal stay (146), which are opposite each other in relation to the axis (22), and the two curved sections (154, 156) are present at short sides (56) of the seal stay (146), which are opposite each other in relation to the axis (22).

9. The filter element according to claim 8, **characterized in that**
the frame element (100) comprises a first curved section (124) and a second curved section (126), wherein the first curved section (124) at least in sections comprises a larger radius of curvature than the second curved section (126), wherein, preferably, the first curved section (124) of the frame element (100) comprises a flattened region in which the radius of curvature is greater than the radius of curvature of the second curved section (126),
and/or
the circumferential seal stay (146) projecting in axial direction comprises a first curved section (154) and a second curved section (156), wherein the first curved section (154) at least in sections comprises a larger radius of curvature than the second curved section (156), wherein, preferably, the first curved section (154) of the seal stay (146) comprises a flattened region in which the radius of curvature is greater than the radius of curvature of the second curved section (156).

10. The filter element according to one of the preceding claims, **characterized in that**
the, in relation to the axis (22), radially outer wall surface (242) of the filter medium body (90) comprises at least two curved sections (244) curved in relation to their circumferential course around the axis (22) which are connected by two connection sections (246), in particular two straight connection sections (246),
and/or
an outer circumference of the filter medium body (90) is reduced, viewed in axial direction from the inflow side (226) to the outflow side (228), in particular the filter medium body (90) tapers, in particular tapers conically, in relation to the radially outer side, when viewed in axial direction from the inflow side (226) toward the outflow side (228).

11. The filter element according to one of the preceding claims, **characterized in that**
the at least one filter medium body (90) comprises at least two filter bellows (134, 136), in particular an inner filter bellows (136) and an outer filter bellows (134), in particular at least two folded filter bellows which at least partially extend around the axis (22) and can be flowed through in parallel by the gaseous medium to be purified,
and/or
an inner filter bellows (136) of the at least one filter medium body (90) is arranged in an interior which is enclosed by an outer filter bellows (134) of the at least one filter medium body (90)
and/or
the at least one filter medium body (90) comprises at least one filter bellows (134, 136), in particular an inner filter bellows (136) and/or an outer filter bellows (134), which comprises a slant in relation to the axis (22).

12. The filter element according to claim 11, **characterized in that** at least one fluid-permeable support element (98) is present, in relation to the axis (22), radially between the at least two filter bellows (134, 136), in particular radially between the inner filter bellows (136) and the outer filter bellows (134), at which at least one of the at least two filter bellows (134, 136), in particular an inner filter bellows (136) and/or an outer filter bellows (134), is supported at least in sections, and/or
the filter element (16) comprises at least one support element (98) at which at least one of the filter bellows (134, 136) is supported, wherein the at least one support element (98) is formed as one piece together with the frame element (100).

13. A filter device (10) for gaseous media, in particular for air, comprising a filter housing (26) with at least one inlet opening (168) for gaseous medium to be purified and at least one outlet opening (40) for purified gaseous medium,
wherein in the filter housing (26) in relation to the gas flow between the at least one inlet opening (168) and the at least one outlet opening at least one filter element (16), which comprises at least one filter medium body (90), is arranged such that it separates a raw side correlated with the inlet opening (168) from a clean side correlated with the outlet opening (40),
wherein the filter housing (26) comprises a first housing part (12) at which the at least one outlet opening (40) is arranged and which comprises at least one filter element receiving space (36), in which the at least one filter element (16) is arranged,
and wherein the filter housing (26) comprises a second housing part (18), at which the at least one inlet opening (168) is arranged and which comprises at least parts (162) of at least one cyclone separator (166),
wherein the second housing part (18) closes off a service opening (34) of the first housing part (12) and the first and the second housing parts (12, 18) are releasably connected to each other and separable from each other in order to be able to remove the at least one filter element (16) through the service opening (34) of the first housing part (12),
**characterized in that**
at least one of the filter elements (16) is a filter element according to one of the claims 1 to 12.

14. A use of a filter element (16), comprising at least a filter medium body (90) in a filter device (10) for gaseous media, **characterized in that** the filter element (16) is a filter element according to one of the claims 1 to 12.

15. A method for assembly of a filter device (10) for gaseous media, in which at least one filter element (16) is inserted through a service opening (34) into a filter element receiving space (36) of a first housing part (12), which comprises at least one outlet opening (40) for purified gaseous medium, of a filter housing (26) of the filter device (10) and, subsequently, the service opening (34) is closed off by a second housing part (18) of the filter housing (26), which comprises at least one inlet opening (168) for gaseous medium to be purified and at least parts (162) of at least one cyclone separator (166), **characterized in that** at least one filter element (16) according to one of the claims 1 to 12 is inserted into the filter element receiving space (36).

## Revendications

1. Élément filtrant (16) pour milieux gazeux, en particulier élément filtrant à air (16), destiné à un dispositif de filtration (10), comprenant au moins un corps de milieu filtrant (90) avec un côté d'entrée (226) et un côté de sortie (228), qui se situent respectivement aux extrémités axiales du corps de milieu filtrant (90) opposées l'une à l'autre par rapport à un axe imaginaire (22),
et un élément de cadre (100) entourant au moins partiellement le corps de milieu filtrant (90), au moins au nombre d'un, qui fait saillie radialement au-delà du corps de milieu filtrant (90) par rapport à l'axe (22) et qui est relié au corps de milieu filtrant (90), au moins au nombre d'un,
un joint d'étanchéité périphérique (96) s'étendant autour de l'axe (22) étant prévu sur une face de l'élément de cadre (100) faisant face au côté d'entrée (226),
et sur l'une des faces de l'élément de cadre (100) tournées vers le côté de sortie (228) au moins une section de support (120_{A}, 120_{B}, 120_{C}, 120_{D}) étant prévue, au moyen de laquelle l'élément filtrant (16) peut être soutenu dans un boîtier de filtre (26) d'un dispositif de filtration (10) au moins dans la direction axiale par rapport à l'axe (22),
**caractérisé en ce que**
l'élément de cadre (100) est moins souple que le joint d'étanchéité périphérique (96), en particulier l'élément de cadre (100) est constitué d'un matériau plus dur que le joint d'étanchéité périphérique (96), la section de support (120_{A}, 120_{B}, 120_{C}, 120_{D}), au moins au nombre d'une, présente au moins deux surfaces d'appui (122_{A}, 122_{B}, 122_{C}, 122_{D}) réparties sur l'étendue circonférentielle par rapport à l'axe (22), qui sont espacées les unes des autres dans la direction axiale par rapport à l'axe (22), et le joint d'étanchéité périphérique (96) présente une nervure d'étanchéité périphérique (146) faisant saillie dans la direction axiale par rapport à l'axe (22) et qui est conçue pour assurer l'étanchéité, au moins partiellement, dans le sens radial par rapport à l'axe (22) face à une surface d'étanchéité correspondante (86) du boîtier de filtre (26).

2. Élément filtrant selon la revendication 1, **caractérisé en ce que** la nervure d'étanchéité (146) dépasse, dans la direction axiale par rapport à l'axe (22), du côté d'entrée (226) du corps de milieu filtrant (90), au moins au nombre d'un, et/ou
**que**
la nervure d'étanchéité (146) est disposée immédiatement à proximité d'une surface circonférentielle de l'élément de cadre (100) située radialement à l'extérieur par rapport à l'axe (22)
et/ou
la nervure d'étanchéité (146) est disposée entièrement radialement à l'extérieur d'une surface circonférentielle radialement extérieure, par rapport à l'axe (22), du corps de milieu filtrant (90), au moins au nombre d'un.

3. Élément filtrant selon l'une quelconque des revendications 1 ou 2, **caractérisé en ce que**
le joint d'étanchéité (96) présente ou est constitué d'un matériau élastique, en particulier d'un élastomère, en particulier d'un élastomère expansé et/ou
l'élément de cadre (100) présente ou est constitué de matière plastique, en particulier d'une matière plastique dure moulable par injection.

4. Élément filtrant selon l'une quelconque des revendications précédentes, **caractérisé en ce que**
le joint d'étanchéité périphérique (96) est délimité, sur un côté tourné vers le côté de sortie (228), par l'élément de cadre (100)
et/ou
une surface de l'élément de cadre (100) tournée vers le côté de sortie (228) est exposée au moins par sections et met à disposition la section de support (120_{A}, 120_{B}, 120_{C}, 120_{D}), au moins au nombre d'une.

5. Élément filtrant selon la revendication 4, **caractérisé en ce que**
l'élément de cadre (100) s'étend à partir de la section de support (120_{A}, 120_{B}, 120_{C}, 120_{D}) radialement vers l'intérieur et/ou en direction du côté d'entrée (226)
et/ou
l'élément de cadre (100) est entouré, au moins par sections, par le matériau du joint d'étanchéité périphérique (96).

6. Élément filtrant selon l'une quelconque des revendications précédentes, **caractérisé en ce que** l'élément de cadre (100) ne présente aucune symétrie de révolution par rapport à son axe (22), au moins au niveau de sa surface latérale radialement extérieure et/ou de sa surface latérale radialement intérieure.

7. Élément filtrant selon l'une quelconque des revendications précédentes, **caractérisé en ce que**
l'élément de cadre (100) présente, le long de son tracé s'étendant autour de l'axe (22), au moins quatre sections (124, 126, 128), parmi lesquelles les sections respectivement adjacentes (124, 128; 126, 128) présentent des tracés courbés différemment, voire rectilignes, et que, pour au moins une paire de deux de ces sections (124, 126) situées de part et d'autre de l'axe (22), les sections correspondantes (124, 126) présentent des tracés courbés différemment et/ou
la nervure d'étanchéité périphérique (146), qui fait saillie dans la direction axiale, le long de son tracé s'étendant autour de l'axe (22), au moins quatre sections (154, 156, 158), parmi lesquelles les sections respectivement adjacentes (154, 158; 156, 158) présentent des tracés courbés différemment, voire rectilignes, et que, pour au moins une paire de deux de ces sections (154, 156) situées de part et d'autre de l'axe (22), les sections correspondantes (154, 156) présentent des tracés courbés différemment.

8. Élément filtrant selon l'une quelconque des revendications précédentes, **caractérisé en ce que**
l'élément de cadre (100) présente au moins deux sections courbes (124, 126) par rapport à leur tracé circulaire autour de l'axe (22), qui sont reliées par deux sections de raccordement (128), en particulier deux sections de raccordement droites (128) par rapport à leur tracé circulaire autour de l'axe (22), les sections de raccordement (128), en particulier les sections de raccordement droites (128), se situant sur des côtés longs (54) de l'élément de cadre (100) opposés par rapport à l'axe (22), et les deux sections de raccordement courbées (124, 126) se situant sur des côtés courts (56) de l'élément de cadre (100) opposés par rapport à l'axe (22),
et/ou
la nervure d'étanchéité périphérique (146) faisant saillie dans la direction axiale présente au moins deux sections courbes (154, 156) par rapport à son tracé périphérique autour de l'axe (22), qui sont reliées par deux sections de raccordement (158), en particulier deux sections de raccordement droites (158) par rapport à leur tracé périphérique autour de l'axe (22), les sections de raccordement (158), en particulier les sections de raccordement droites (158), se situant sur des côtés longs (54) de la nervure d'étanchéité (146) opposés par rapport à l'axe (22), et les deux sections courbées (154, 156) se situant sur des côtés courts (56) de la nervure d'étanchéité (146) opposés par rapport à l'axe (22).

9. Élément filtrant selon la revendication 8, **caractérisé en ce que** l'élément de cadre (100) présente une première section courbée (124) et une deuxième section courbée (126), la première section courbée (124) présentant, au moins par sections, un rayon de courbure supérieur à celui de la deuxième section courbée (126), la première section courbée (124) de l'élément de cadre (100) présentant de préférence une zone aplatie dans laquelle le rayon de courbure est supérieur à celui de la deuxième section courbée (126),
et/ou
la nervure d'étanchéité périphérique (146) faisant saillie dans la direction axiale présente une première section courbée (154) et une deuxième section courbée (156), le premier tronçon courbé (154) présentant, au moins par sections, un rayon de courbure supérieur à celui de la deuxième section courbée (156), la première section courbée (154) de la nervure d'étanchéité (146) présentant de préférence une zone aplatie dans laquelle le rayon de courbure est supérieur à celui de la deuxième section courbée (156).

10. Élément filtrant selon l'une quelconque des revendications précédentes, **caractérisé en ce que**
la surface circonférentielle (242) du corps de milieu filtrant (90), située radialement à l'extérieur par rapport à l'axe (22), présente, par rapport à son tracé s'étendant autour de l'axe (22), au moins deux sections courbes (244) qui sont reliées par deux sections de raccordement (246), en particulier deux sections de raccordement droites (246),
et/ou
une périphérie extérieure du corps de milieu filtrant (90) se rétrécit dans la direction axiale du côté d'entrée (226) vers le côté de sortie (228), en particulier le corps de milieu filtrant (90) se rétrécit, par rapport à son côté radialement extérieur, dans la direction axiale du côté d'entrée (226) vers le côté de sortie (228), en particulier de manière conique.

11. Élément filtrant selon l'une quelconque des revendications précédentes, **caractérisé en ce que**
le corps de milieu filtrant (90), au moins au nombre d'un, comprend au moins deux soufflets de filtre (134, 136), en particulier un soufflet de filtre intérieur (136) et un soufflet de filtre extérieur (134), en particulier au moins deux soufflets de filtre plissés, qui s'étendent au moins partiellement autour de l'axe (22) et qui peuvent être traversés parallèlement par le milieu gazeux à purifier,
et/ou
un soufflet de filtre intérieur (136) du corps de milieu filtrant (90), au moins au nombre d'un, est disposé dans un espace intérieur entouré par un soufflet de filtre extérieur (134) du corps de milieu filtrant (90), au moins au nombre d'un et/ou
le corps de milieu filtrant (90), au moins au nombre d'un, présente au moins un soufflet de filtre (134, 136), en particulier un soufflet de filtre intérieur (136) et/ou un soufflet de filtre extérieur (134), qui présente une inclinaison par rapport à l'axe (22).

12. Élément filtrant selon la revendication 11, **caractérisé en ce que**, par rapport à l'axe (22), radialement entre les soufflets de filtre (134, 136), au moins au nombre de deux, en particulier radialement entre le soufflet de filtre intérieur (136) et le soufflet de filtre extérieur (134), au moins un élément de support perméable aux fluides (98) est présent, sur lequel s'appuie, au moins par sections, au moins l'un des soufflets de filtre (134, 136), au moins au nombre de deux, en particulier un soufflet de filtre intérieur (136) et/ou un soufflet de filtre extérieur (134),
et/ou
l'élément filtrant (16) présente au moins un élément de support (98) sur lequel s'appuie au moins l'un des soufflets de filtre (134, 136), l'élément de support (98), au moins au nombre d'un, étant formé d'un seul tenant avec l'élément de cadre (100).

13. Dispositif de filtration (10) pour des milieux gazeux, en particulier pour l'air, comprenant un boîtier de filtre (26) avec au moins une ouverture d'entrée (168) pour le milieu gazeux à purifier et au moins une ouverture de sortie (40) pour le milieu gazeux purifié,
dans le boîtier de filtre (26), par rapport au flux de gaz, entre l'ouverture d'entrée (168), au moins au nombre d'une, et l'ouverture de sortie, au moins au nombre d'une, au moins un élément filtrant (16), qui présente au moins un corps de milieu filtrant (90), étant disposé de telle sorte que celui-ci sépare un côté brut, associé à l'ouverture d'entrée (168), d'un côté pur, associé à l'ouverture de sortie (40),
le boîtier de filtre (26) comprenant un premier composant de boîtier (12) sur lequel est disposé l'ouverture de sortie (40), au moins au nombre d'une, et qui présente au moins un compartiment de réception d'élément filtrant (36) dans lequel est disposé l'élément filtrant (16), au moins au nombre d'un,
et le boîtier de filtre (26) comprenant un deuxième composant de boîtier (18) sur lequel est disposé l'ouverture d'entrée (168), au moins au nombre d'une, et qui présente au moins des parties (162) d'au moins un séparateur à cyclone (166),
le deuxième composant de boîtier (18) obturant une ouverture d'entretien (34) du premier composant de boîtier (12), et les premier et deuxième composants de boîtier (12, 18) sont reliés entre eux de manière détachable et peuvent être séparés l'un de l'autre afin de pouvoir retirer l'élément filtrant (16), au moins au nombre d'un, par l'ouverture d'entretien (34) du premier composant de boîtier (12),
**caractérisé en ce qu'**
au moins l'un des éléments filtrants (16) est un élément filtrant selon l'une quelconque des revendications 1 à 12.

14. Utilisation d'un élément filtrant (16), comprenant au moins un corps de milieu filtrant (90), dans un dispositif de filtration (10) pour milieux gazeux, **caractérisée en ce que** l'élément filtrant (16) est un élément filtrant selon l'une quelconque des revendications 1 à 12.

15. Procédé d'assemblage d'un dispositif de filtration (10) pour des milieux gazeux, dans lequel au moins un élément filtrant (16) est introduit, par une ouverture d'entretien (34), dans compartiment de réception d'élément de filtrant (36) d'un premier composant de boîtier (12), qui présente au moins une ouverture de sortie (40) pour le milieu gazeux épuré, d'un boîtier de filtre (26) du dispositif de filtration (10), puis l'ouverture d'entretien (34) est fermée par un deuxième composant de boîtier (18) du boîtier de filtre (26), qui présente au moins une ouverture d'entrée (168) pour le fluide gazeux à purifier et au moins des parties (162) d'au moins un séparateur à cyclone (166), **caractérisé en ce qu'**au moins un élément filtrant (16) selon l'une quelconque des revendications 1 à 12 est introduit dans le compartiment de réception d'élément filtrant (36).
